# EUROPEAN PATENT APPLICATION

(11) **EP 4 797 695 A1**
(43) Date of publication of application: **26.08.2026**
(21) Application number: 24878881.2
(22) Date of filing: 10.10.2024
(51) Int. Cl.: H04N 19/42

(54) **ENCODING METHOD AND APPARATUS, DECODING METHOD AND APPARATUS, AND ELECTRONIC DEVICE**

(30) Priority: 16.10.2023 CN 202311336481
(71) Applicant: Vivo Mobile Communication Co., Ltd., Dongguan, Guangdong 523863 (CN)
(72) Inventor: ZHANG, Wei, Dongguan, Guangdong 523863 (CN); WANG, Di, Dongguan, Guangdong 523863 (CN); YANG, Fuzheng, Dongguan, Guangdong 523863 (CN); LV, Zhuoyi, Dongguan, Guangdong 523863 (CN)
(74) Representative: Conti, Marco
(86) International application number: PCT/CN2024/123842
(87) International publication number: WO 2025/082237

(57) **Abstract**

This application discloses an encoding method, a decoding method, an apparatus, and an electronic device, and belongs to the field of coding technologies. The encoding method in embodiments of this application includes: An encoding side obtains first residual information of a first attribute of a to-be-encoded point. The first residual information is determined based on a second attribute of the to-be-encoded point, the second attribute is an encoded attribute, and an attribute type of the first attribute is different from that of the second attribute. The encoding side generates a target bitstream based on the first residual information.

## Description

### CROSS REFERENCE TO RELATED APPLICATIONS

This application claims priority to Chinese Patent Application No. 202311336481.9, filed in China on October 16, 2023, which is incorporated herein by reference in its entirety.

### TECHNICAL FIELD

This application belongs to the field of coding technologies, and specifically relates to an encoding method, a decoding method, an apparatus, and an electronic device.

### BACKGROUND

In an existing geometry-based point cloud compression (Geometry Point Cloud Compression, G-PCC) attribute encoding process, only geometry information (for example, a point-to-point distance) is used as a criterion for selecting a nearest neighbor for attribute prediction, that is, a nearest neighbor of a current to-be-coded point is selected based on the point-to-point distance, and a function of the distance is used as a weight, to perform weighted prediction on attribute information of the nearest neighbor to obtain a predicted attribute value of a current to-be-coded point.

However, due to complex spatial distribution of point clouds, using only geometry information as a similarity determining condition for attribute prediction is not accurate and effective enough. In an original point cloud, there may be a situation in which a spatial distance between a to-be-coded point and a neighbor prediction point is close but attribute values differ greatly. For such a situation, using a current attribute prediction method cannot obtain a small transform coefficient or predicted residual, and cannot achieve efficient attribute redundancy reduction.

### SUMMARY

Embodiments of this application provide an encoding method, a decoding method, an apparatus, and an electronic device, to reduce a bit rate and improve coding efficiency.

According to a first aspect, an encoding method is provided. The method includes:

An encoding side obtains first residual information of a first attribute of a to-be-encoded point. The first residual information is determined based on a second attribute of the to-be-encoded point, the second attribute is an encoded attribute, and an attribute type of the first attribute is different from that of the second attribute.

The encoding side generates a target bitstream based on the first residual information.

According to a second aspect, an encoding apparatus is provided, including:
a first obtaining module, configured to obtain first residual information of a first attribute of a to-be-encoded point, where the first residual information is determined based on a second attribute of the to-be-encoded point, the second attribute is an encoded attribute, and an attribute type of the first attribute is different from that of the second attribute; and
a generation module, configured to generate a target bitstream based on the first residual information.

According to a third aspect, a decoding method is provided. The method includes:

A decoding side obtains a reconstructed attribute value of a first attribute of a to-be-decoded point. The reconstructed attribute value is determined based on a second attribute of the to-be-decoded point, the second attribute is a decoded attribute, and an attribute type of the first attribute is different from that of the second attribute.

According to a fourth aspect, a decoding apparatus is provided, including:
a second obtaining module, configured to obtain a reconstructed attribute value of a first attribute of a to-be-decoded point, where the reconstructed attribute value is determined based on a second attribute of the to-be-decoded point, the second attribute is a decoded attribute, and an attribute type of the first attribute is different from that of the second attribute.

According to a fifth aspect, an electronic device is provided, including a processor and a memory. The memory stores a program or instructions executable on the processor; and when executed by the processor, the program or instructions implement the steps of the method as described in the first aspect.

According to a sixth aspect, an electronic device is provided, including a processor and a communication interface. The processor is configured to: obtain first residual information of a first attribute of a to-be-encoded point, where the first residual information is determined based on a second attribute of the to-be-encoded point, the second attribute is an encoded attribute, and an attribute type of the first attribute is different from that of the second attribute; and
generate a target bitstream based on the first residual information.

According to a seventh aspect, an electronic device is provided, including a processor and a memory. The memory stores a program or instructions executable on the processor; and when executed by the processor, the program or instructions implement the steps of the method as described in the second aspect.

According to an eighth aspect, an electronic device is provided, including a processor and a communication interface. The processor is configured to obtain a reconstructed attribute value of a first attribute of a to-be-decoded point. The reconstructed attribute value is determined based on a second attribute of the to-be-decoded point, the second attribute is a decoded attribute, and an attribute type of the first attribute is different from that of the second attribute.

According to a ninth aspect, a coding system is provided, including an encoding device and a decoding device. The encoding device may be configured to perform the steps of the method as described in the first aspect, and the decoding device may be configured to perform the steps of the method as described in the second aspect.

According to a tenth aspect, a readable storage medium is provided. A program or instructions are stored on the readable storage medium; and when executed by a processor, the program or instructions implement the steps of the method as described in the first aspect or the second aspect.

According to an eleventh aspect, a chip is provided. The chip includes a processor and a communication interface. The communication interface is coupled to the processor, and the processor is configured to run a program or instructions to implement the steps of the method as described in the first aspect or the second aspect.

According to a twelfth aspect, a computer program/program product is provided. The computer program/program product is stored in a storage medium, and the computer program/program product is executed by at least one processor to implement the steps of the method as described in the first aspect or the second aspect.

In embodiments of this application, cross attribute prediction can be achieved by determining the first residual information of the first attribute of the to-be-encoded point based on the second attribute of the to-be-encoded point. Fully considering the encoded second attribute in a process of encoding the first attribute reduces information redundancy in a bitstream, thereby reducing a bit rate and improving encoding efficiency.

### BRIEF DESCRIPTION OF THE DRAWINGS

FIG. 1 is a schematic diagram of a coding system according to an embodiment of this application;
FIG. 2 is a flowchart of encoding performed by an encoder in an AVS-PCC encoding framework;
FIG. 3 is a flowchart of encoding performed by an encoder in an MPEG G-PCC encoding framework;
FIG. 4 is a flowchart of decoding performed by a decoder in an AVS-PCC decoding framework;
FIG. 5 is a flowchart of decoding performed by a decoder in an MPEG G-PCC decoding framework;
FIG. 6 is a diagram of a G-PCC-based encoder framework;
FIG. 7 is a diagram of a G-PCC-based decoder framework;
FIG. 8 shows a generation process of List1 and List2;
FIG. 9 shows a definition of opposite orientations;
FIG. 10 is a schematic flowchart of an encoding method according to an embodiment of this application;
FIG. 11 is a schematic diagram of a principle of an encoding method according to an embodiment of this application;
FIG. 12 is a schematic flowchart of a decoding method according to an embodiment of this application;
FIG. 13 is a schematic diagram of modules of an encoding apparatus according to an embodiment of this application;
FIG. 14 is a schematic diagram of modules of a decoding apparatus according to an embodiment of this application;
FIG. 15 is a schematic diagram of a structure of an electronic device according to an embodiment of this application; and
FIG. 16 is a schematic diagram of a structure of a terminal according to an embodiment of this application.

### DESCRIPTION OF EMBODIMENTS

The following clearly describes the technical solutions in embodiments of this application with reference to the accompanying drawings in embodiments of this application. It is clear that the described embodiments are only some rather than all of embodiments of this application. All other embodiments obtained by persons of ordinary skill in the art based on embodiments of this application shall fall within the protection scope of this application.

The terms "first", "second", and the like in this application are used to distinguish between similar objects rather than to describe a specific order or sequence. It should be understood that terms used in this way are interchangeable in appropriate circumstances such that embodiments of this application can be implemented in an order other than the order illustrated or described herein. In addition, objects distinguished by "first" and "second" are generally of a same type, and quantities of the objects are not limited, for example, there may be one or more first objects. In addition, "or" in this application represents at least one of connected objects. For example, "A or B" covers three schemes, that is, scheme 1: including A and not including B; scheme 2: including B and not including A; and scheme 3: including both A and B. The character "/" generally indicates that the associated objects have an "or" relationship.

Before the technical solutions according to embodiments of this application are described, meanings of some terms therein are first explained.

Point cloud (Point Cloud): A point cloud refers to a set of discrete points irregularly distributed in space that express a spatial structure and surface attributes of a three-dimensional object or three-dimensional scene. Point clouds can be classified into different categories according to different classification standards. For example, in terms of a method for obtaining point clouds, point clouds can be classified into dense point clouds and sparse point clouds. For another example, in terms of a temporal type of point clouds, point clouds can be classified into static point clouds and dynamic point clouds.

Point cloud data (Point Cloud Data): Geometry coordinate information and attribute information of each point in a point cloud together constitute point cloud data. The geometry coordinate information can also be called three-dimensional position information. Geometry coordinate information of a point in a point cloud refers to the spatial coordinates (x, y, z) of the point, which may include coordinate values of the point in all coordinate axis directions of a three-dimensional coordinate system, for example, the coordinate value x in an X-axis direction, the coordinate value y in a Y-axis direction, and the coordinate value z in a Z-axis direction. Attribute information of a point in a point cloud may include at least one of the following: color information, material information, and laser reflection intensity information (which may also be called reflectance). Usually, all points in a point cloud have a same amount of attribute information. For example, each point in a point cloud may have two types of attribute information: color information and laser reflection intensity. For another example, each point in a point cloud may have three types of attribute information: color information, material information, and laser reflection intensity information.

Point cloud encoding: Point cloud encoding is a process of encoding geometry coordinate information and attribute information of each point in a point cloud to obtain a compressed bitstream. Point cloud encoding may include two main processes: geometry coordinate information encoding and attribute information encoding. Currently, a point cloud encoding framework that can compress point clouds may be a geometry-based point cloud compression (Geometry Point Cloud Compression, G-PCC) coding framework or video-based point cloud compression (Video Point Cloud Compression, V-PCC) coding framework provided by the Moving Picture Experts Group (Moving Picture Experts Group, MPEG), or may be an AVS-PCC coding framework provided by the Audio Video Standard (Audio Video Standard, AVS).

Point cloud decoding: Point cloud decoding is a process of decoding a compressed bitstream obtained through point cloud encoding to reconstruct a point cloud. To be specific, point cloud decoding is a process of reconstructing geometry coordinate information and attribute information of each point in a point cloud based on a geometry bitstream and an attribute bitstream in a compressed bitstream. After a decoding side obtains a compressed bitstream, for the geometry bitstream, entropy decoding is first performed to obtain quantized information of each point in a point cloud, and then de-quantization is performed to reconstruct geometry coordinate information of each point in the point cloud. For the attribute bitstream, entropy decoding is first performed to obtain quantized attribute residual information or quantized transform coefficients of each point in the point cloud; then de-quantization is performed on the quantized attribute residual information to obtain reconstructed residual information, de-quantization is performed on the quantized transform coefficients to obtain reconstructed transform coefficients, and inverse transform is performed on the reconstructed transform coefficients to obtain reconstructed residual information. The attribute information of each point in the point cloud can be reconstructed based on the reconstructed residual information of each point in the point cloud. The reconstructed attribute information of all points in the point cloud is sequentially matched one-to-one with the reconstructed geometry coordinate information to reconstruct the point cloud.

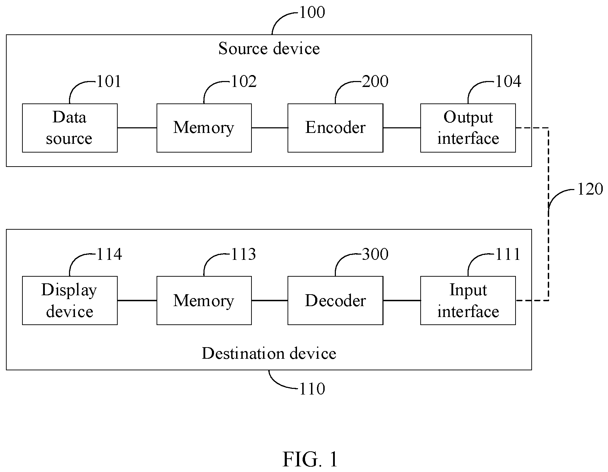

FIG. 1 is a schematic diagram of a coding system 10 according to an embodiment of this application. The technical solutions according to embodiments of this application involve coding (CODEC) (including encoding or decoding) of point cloud data.

As shown in FIG. 1, the coding system 10 includes a source device 100. The source device 100 provides encoded point cloud data that is decoded and displayed by a destination device 110. Specifically, the source device 100 provides point cloud data to the destination device 110 via a communication medium 120. The source device 100 and the destination device 110 may include any one or more of the following: desktop computer, notebook (that is, laptop) computer, tablet computer, set-top box, mobile phone, wearable device (such as smartwatch or wearable camera), television, camera, display device, vehicle user equipment, virtual reality (virtual reality, VR) device, augmented reality (Augmented reality, AR) device, mixed reality (mixed reality, MR) device, digital media player, video game console, video conferencing device, video streaming device, broadcast receiver device, broadcast transmitter device, spacecraft, aircraft, robot, satellite, and the like.

In the example of FIG. 1, the source device 100 includes a data source 101, a memory 102, an encoder 200, and an output interface 104. The destination device 110 includes an input interface 111, a decoder 300, a memory 113, and a display device 114. The source device 100 is an example of an encoding device, and the destination device 110 is an example of a decoding device. In other examples, the source device 100 and the destination device 110 may not include some components shown in FIG. 1, or may include other components not shown in FIG. 1. For example, the source device 100 may obtain point cloud data through an external capture device. Similarly, the destination device 110 may be connected to an external display device interface without including an integrated display device. For another example, the memory 102 and the memory 113 may be external memories.

Although FIG. 1 shows the source device 100 and the destination device 110 as separate devices, in some examples, the two may alternatively be integrated into one device. In such embodiments, functions corresponding to the source device 100 and functions corresponding to the destination device 110 may be implemented using the same hardware or software, or separate hardware or software, or any combination thereof.

In some examples, the source device 100 and the destination device 110 may perform one-way data transmission or two-way data transmission. If performing two-way data transmission, the source device 100 and the destination device 110 may operate in a substantially symmetric manner, that is, each of the source device 100 and the destination device 110 includes an encoder and a decoder.

The data source 101, a source of point cloud data (that is, original, unencoded point cloud data), provides point cloud data to the encoder 200, and the encoder 103 encodes the point cloud data. The source device 100 may include a capture device (such as a camera device, a sensing device, or a scanning device), an archive including previously captured point cloud data, or a feed interface for receiving point cloud data from a data content provider. The camera device may include a common camera, a stereo camera, a light field camera, and the like. The sensing device may include a laser device, a radar device, and the like. The scanning device may include a three-dimensional laser scanning device, and the like. Point cloud data can be obtained by collecting real-world visual scenes through the capture device. As an alternative, the data source 101 may generate computer graphics-based data as source data, or combine real-time data, archived data, and computer-generated data. For example, the data source generates point cloud data based on a virtual object (such as a virtual three-dimensional object and virtual three-dimensional scenes obtained through three-dimensional modeling).

The encoder 200 encodes captured, pre-captured, or computer-generated data. The encoder 200 may rearrange the point cloud data, changing from the received order (sometimes called "display order") to the encoding order. The encoder 200 may generate a bitstream including the encoded point cloud data. The source device 100 may then output the encoded point cloud data to the communication medium 120 via the output interface 104, for reception or retrieval by, for example, the input interface 111 of the destination device 110.

The memory 102 of the source device 100 and the memory 113 of the destination device 110 represent general-purpose memories. In some examples, the memory 102 may store raw data from the data source 101, and the memory 113 may store decoded point cloud data from the decoder 300. Additionally or alternatively, the memories 102 and 113 may respectively store software instructions executable by, for example, the encoder 200 and the decoder 300. Although in this example, the memory 102 and the memory 113 are shown separately from the encoder 200 and the decoder 300, it should be understood that the encoder 200 and the decoder 300 may also include internal memories for functionally similar or equivalent purposes. If the encoder 200 and the decoder 300 are deployed on a same hardware device, the memory 102 and the memory 113 may be a same memory. In addition, the memories 102 and 113 may store, for example, encoded point cloud data output from the encoder 200 and input to the decoder 300. In some examples, portions of the memories 102 and 113 may be allocated as one or more point cloud buffers, such as for storing raw, decoded, or encoded point cloud data.

In some examples, the source device 100 may output encoded data from the output interface 104 to the memory 113. Similarly, the destination device 110 may access the encoded data from the memory 113 via the input interface 111. The memory 113 or the memory 102 may include any one of various distributed or locally accessible data storage media, such as a hard drive, a Blu-ray disc, a digital versatile disc (Digital Versatile Disc, DVD), a compact disc read-only memory (Compact Disc Read-Only Memory, CD-ROM), a flash memory, a volatile or non-volatile memory, or any other suitable digital storage medium for storing encoded point cloud data.

The output interface 104 may include any type of medium or device capable of sending encoded point cloud data from the source device 100 to the destination device 110. For example, the output interface 104 may include a transmitter or transceiver configured to directly send encoded point cloud data from the source device 100 to the destination device 110 in real time, such as an antenna. The encoded point cloud data may be modulated according to a communication standard of a wireless communication protocol and sent to the destination device 110.

The communication medium 120 may include a transient medium, such as wireless broadcast or wired network transmission. For example, the communication medium 120 may include a radio frequency (radio frequency, RF) spectrum or one or more physical transmission lines (for example, cables). The communication medium 120 may form a part of a packet-based network (such as a local area network, a wide area network, or a global network such as the Internet). The communication medium 120 may also take the form of a storage medium (for example, a non-transitory storage medium), such as a hard disk, a flash drive, a compact disc, a digital point cloud disc, a Blu-ray disc, a volatile or non-volatile memory, or any other suitable digital storage medium for storing encoded point cloud data.

In some implementations, the communication medium 120 may include a router, a switch, a base station, or any other device that may be used to facilitate communication from the source device 100 to the destination device 110. For example, a server (not shown) may receive encoded point cloud data from the source device 100 and provide it to the destination device 110, such as providing it to the destination device 110 through network transmission. The server may include a web server (for example, for a website), a server configured to provide file transfer protocol services (such as file transfer protocol (File Transfer Protocol, FTP) or file delivery over unidirectional transport (File Delivery Over Unidirectional Transport, FLUTE) protocol), a content delivery network (content delivery network, CDN) device, a hypertext transfer protocol (Hypertext Transfer Protocol, HTTP) server, a multimedia broadcast multicast service (Multimedia Broadcast Multicast Service, MBMS) or evolved MBMS (evolved Multimedia Broadcast Multicast Service, eMBMS) server, or a network-attached storage (Network-attached storage, NAS) device. The server may implement one or more HTTP streaming protocols, such as MPEG media transport (MPEG Media Transport, MMT) protocol, dynamic adaptive streaming over HTTP (Dynamic Adaptive Streaming over HTTP, DASH) protocol, HTTP live streaming (HTTP Live Streaming, HLS) protocol, or real time streaming protocol (Real Time Streaming Protocol, RTSP).

The destination device 110 may access the encoded point cloud data from the server, for example, through a wireless channel (for example, a Wi-Fi connection) or a wired connection (for example, a digital subscriber line (Digital Subscriber Line, DSL), or a cable modem) for accessing the encoded point cloud data stored on the server.

The output interface 104 and the input interface 111 may represent wireless transmitters/receivers, modems, wired networking components (for example, Ethernet cards), wireless communication components operating according to IEEE 802.11 standards or IEEE 802.15 standards (for example, ZigBee^{™} and Bluetooth standards), or other physical components. In an example that the output interface 104 and the input interface 111 include wireless components, the output interface 104 and the input interface 111 may be configured to transfer data, such as encoded point cloud data, over Wi-Fi, Ethernet, or cellular networks (such as 4G, LTE (long term evolution), advanced LTE, 5G, and 6G.

The technologies provided in embodiments of this application may be applied to support, for example, one or more of the following application scenarios: machine perception point cloud, which may be used in scenarios such as an autonomous navigation system, a real-time inspection system, a geographic information system, a visual sorting robot, and a rescue and disaster relief robot; and human eye perception point cloud, which may be used in point cloud application scenarios such as digital cultural heritage, free viewpoint broadcasting, three-dimensional immersive communication, and three-dimensional immersive interaction.

The input interface 111 of the destination device 110 receives an encoded bitstream (bitstream) from the communication medium 120. The encoded bitstream may include high-level syntax elements and encoded data units (for example, sequences, picture groups, pictures, slices, and blocks), where the high-level syntax elements are used to decode the encoded data units to obtain decoded point cloud data. The display device 114 displays the decoded point cloud data to a user. The display device 114 may include a cathode ray tube (Cathode ray tube, CRT), a liquid-crystal display (liquid-crystal display, LCD), a plasma display, an organic light-emitting diode (organic light-emitting diode, OLED) display, or other types of display devices. In some examples, the destination device 110 may not have the display device 114, for example, if the decoded point cloud data is used to determine a position of a physical object, the display device 114 may be replaced by a processor.

The encoder 200 and the decoder 300 may be implemented as one or more of various processing circuits. The processing circuit may include a microprocessor, a digital signal processor (Digital Signal Processors, DSP), an application specific integrated circuit (Application Specific Integrated Circuit, ASIC), a field programmable gate array (Field Programmable Gate Arrays, FPGA), a discrete logic, hardware, or any combination thereof. When the technology is implemented wholly or partially in software, the device may store instructions used for software in a suitable non-transitory computer-readable storage medium and execute the instructions in hardware using one or more processors to perform the technology provided in embodiments of this application.

The following uses the G-PCC and AVS-PCC coding frameworks as examples to describe the basic principles of the encoder 200 and the decoder 300 provided in embodiments of this application.

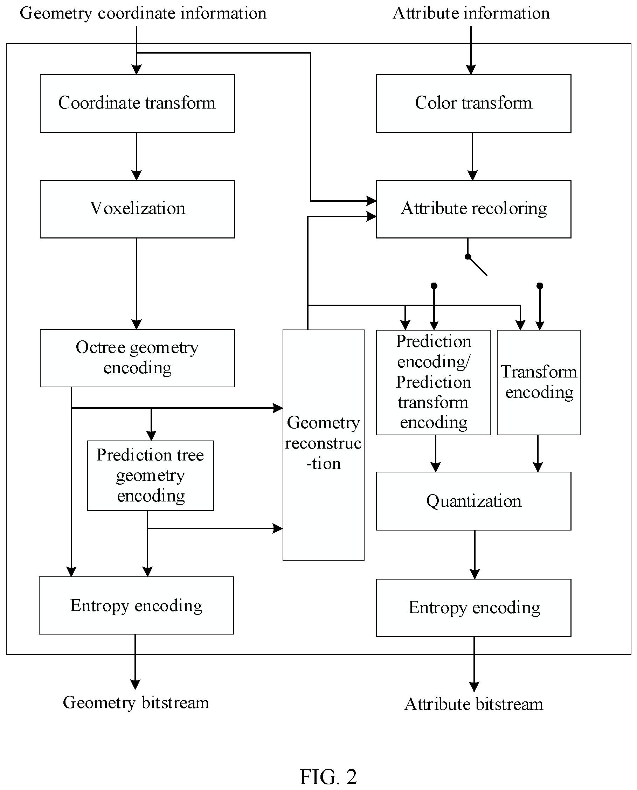

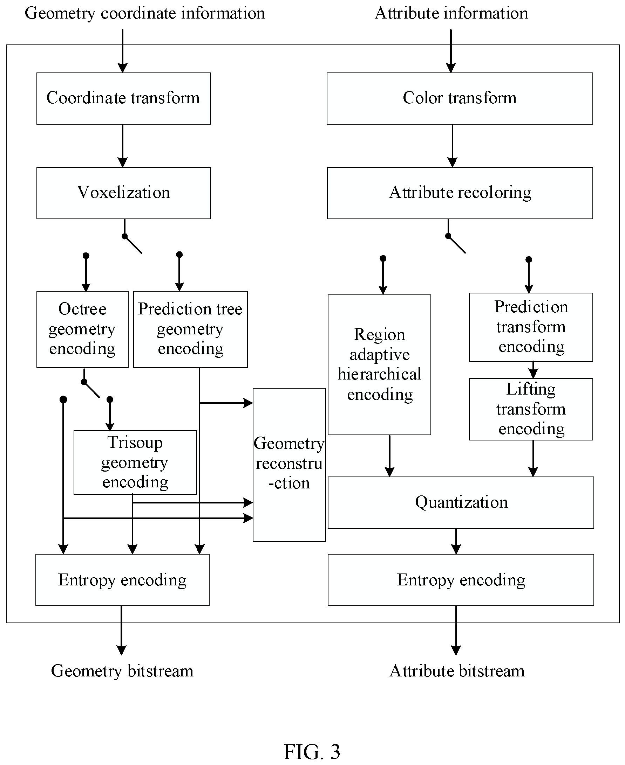

The G-PCC and AVS-PCC coding frameworks are roughly the same. FIG. 2 is a flowchart of encoding performed by an encoder in an AVS-PCC encoding framework. FIG. 3 is a flowchart of encoding performed by an encoder in an MPEG G-PCC encoding framework. The above encoders may be the encoder 200 shown in FIG. 1. The above encoding frameworks may generally be divided into a geometry coordinate information encoding process and an attribute information encoding process. In the geometry information encoding process, geometry coordinate information of each point in a point cloud is encoded to obtain a geometry bitstream. In the attribute information encoding process, attribute information of each point in the point cloud is encoded to obtain an attribute bitstream. The geometry bitstream and the attribute bitstream together constitute a compressed bitstream of the point cloud.

For the geometry information encoding process, the encoding process executed by the encoder 200 is as follows:
1. Pre-processing (Pre-Processing): may include coordinate transform (Transform Coordinates) and voxelization (Voxelize). Through scaling and translation operations, pre-processing is to convert point cloud data in three-dimensional space into an integer form and move its minimum geometry position to the coordinate origin. In some examples, the encoder 200 may not perform pre-processing.
2. Geometry encoding: For the AVS-PCC encoding framework, geometry encoding includes two modes: octree (Octree)-based geometry encoding and prediction tree geometry encoding. For the G-PCC encoding framework, geometry encoding includes three modes: octree-based geometry encoding, trisoup (Trisoup)-based geometry encoding, and prediction tree prediction encoding.

Octree-based geometry encoding: An octree is a tree data structure that uniformly partitions a preset bounding box (bounding box) in three-dimensional space, with each node having eight child nodes. By using "1" and "0" to indicate whether each child node of the octree is occupied or not, occupancy code information (Occupancy Code) is obtained as a bitstream for point cloud geometry information.

Prediction tree geometry encoding: A prediction tree is generated using a prediction strategy. Starting from the root node of the prediction tree, each node is traversed, and a residual coordinate value corresponding to each traversed node is encoded.

Trisoup-based geometry encoding: A point cloud is partitioned into blocks (block) of a specified size. Intersection points (referred to as vertexes) of the point cloud surface with the edges of the blocks are located. Geometry information compression is implemented by encoding whether there is an intersection point on each edge of the block and the positions of the intersection points.

3. Geometry entropy encoding (Geometry Entropy Encoding): Statistical compression encoding is performed on the occupancy code information of the octree, the predicted residual information of the prediction tree, and the vertex information of the trisoup representation, and finally a binarized (0 or 1) compressed bitstream is output. Statistical encoding is a lossless encoding method that can effectively reduce a bit rate required to represent the same signal. A commonly used statistical encoding method is context-based adaptive binary arithmetic coding (Content Adaptive Binary Arithmetic Coding, CABAC).

4. Geometry Reconstruction: The geometry information obtained after geometry encoding is decoded and reconstructed.

For the attribute information encoding process, the encoding process performed by the encoder 200 is as follows:
1. Color transform: Transform is used to transform color information of an attribute to a different domain, for example, the color information may be transformed from the RGB color space to the YCbCr color space.
2. Attribute recoloring (Recoloring): In the case of lossy encoding, after geometry coordinate information encoding, the encoding side needs to decode and reconstruct the geometry information, that is, restore the geometry information of each point in the point cloud. In the original point cloud, the attribute information corresponding to one or more neighbor points is found as the attribute information of the reconstructed point.
   In some examples, the encoder 200 may not perform color transform or attribute recoloring.
3. Attribute information processing: In AVS-PCC, attribute information processing may include three modes: prediction (Prediction) encoding, transform (Transform) encoding, and prediction and transform (Prediction&Transform) encoding. These three encoding modes may be used under different conditions.

Prediction encoding means: determining, from encoded points, a neighbor point of a to-be-encoded point as a prediction point based on information such as a distance or spatial relationship, and calculating predicted attribute information of the to-be-encoded point based on attribute information of the prediction point according to a specified rule; calculating a difference between true attribute information and the predicted attribute information of the to-be-encoded point as attribute residual information, and performing quantization, transform (optional), and entropy encoding on the attribute residual information.

Transform encoding means: grouping and transforming attribute information using a transform method such as discrete cosine transform (Discrete Cosine Transform, DCT) or Haar transform (Haar Transform, Haar), and quantizing transform coefficients; performing de-quantization and inverse transform to obtain reconstructed attribute information; calculating a difference between true attribute information and the reconstructed attribute information to obtain attribute residual information, and quantizing the attribute residual information; and performing entropy encoding on the quantized transform coefficients and attribute residuals.

Prediction transform encoding means: transforming the attribute residual information obtained by prediction, and performing quantization and entropy encoding on transform coefficients.

In MPEG G-PCC, attribute information processing may include three modes: prediction transform (Prediction Transform) encoding, lifting transform (Lifting Transform) encoding, and region adaptive hierarchical transform (Region Adaptive Hierarchical Transform, RAHT) encoding. These three encoding modes may be used under different conditions.

Prediction transform encoding means: selecting a subset of points based on distance, partitioning a point cloud into a plurality of different levels of detail (Level of Detail, LOD) to implement multi-LOD point cloud representation from coarse to fine. Prediction from bottom to top can be implemented between adjacent layers, that is, the attribute information of points introduced into the fine layer is predicted from neighbor points at the coarse layer to obtain corresponding attribute residual information. The points at the bottom layer are encoded as reference information.

Lifting transform encoding means: introducing a weight update strategy for neighbor points based on prediction between adjacent LOD layers, to finally obtain the predicted attribute information of each point and obtain the corresponding attribute residual information.

Region adaptive hierarchical transform encoding means: transforming attribute information through RAHT to transform a signal into the transform domain, where the resulting signal is called a transform coefficient.

4. Attribute information quantization (Attribute Quantization): A degree of quantization fineness is typically determined by a quantization parameter. Transform coefficients or attribute residual information obtained by attribute information processing are quantized, and entropy encoding is performed on quantized results. For example, in prediction transform encoding and lifting transform encoding, entropy encoding is performed on the quantized attribute residual information; in RAHT, entropy encoding is performed on quantized transform coefficients.

5. Entropy encoding (Entropy Coding): Typically, quantized attribute residual information and/or transform coefficients are finally compressed using run length encoding (Run Length Coding) and arithmetic encoding (Arithmetic Coding). Information such as the corresponding encoding mode and quantization parameter is also encoded using an entropy encoder.

The encoder 200 performs encoding processing on the geometry coordinate information of each point in the point cloud to obtain a geometry bitstream, and performs encoding processing on the attribute information of each point in the point cloud to obtain an attribute bitstream. The encoder 200 may transmit both the geometry bitstream and attribute bitstream obtained through encoding to the decoder 300.

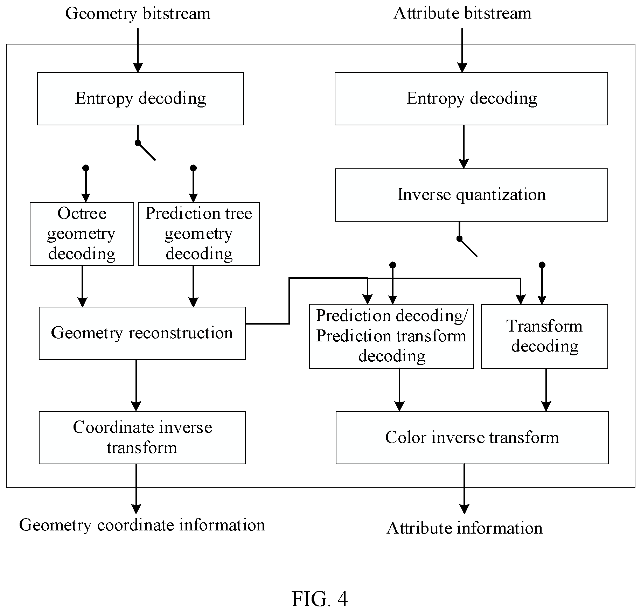

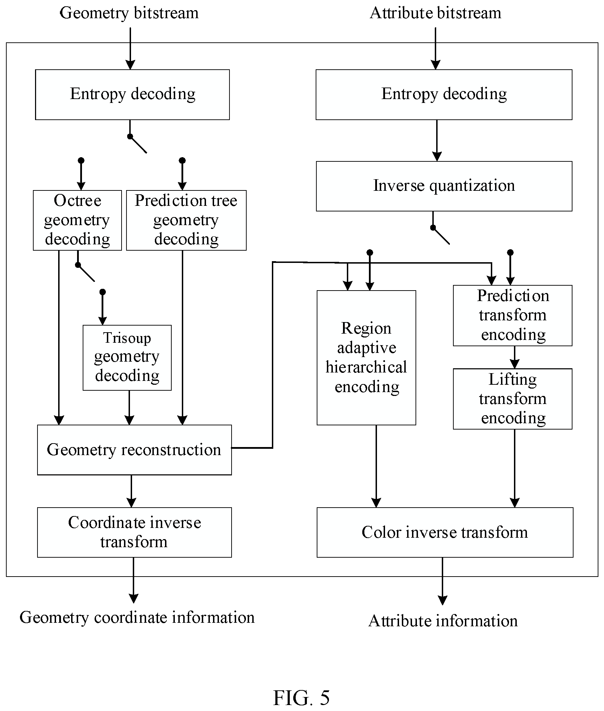

FIG. 4 is a flowchart of decoding performed by a decoder in an AVS-PCC decoding framework. FIG. 5 is a flowchart of decoding performed by a decoder in an MPEG G-PCC decoding framework. The above decoders may be the decoder 300 shown in FIG. 1. After receiving a compressed bitstream (that is, an attribute bitstream and a geometry bitstream) transmitted by the encoder 200, the decoder 300 performs decoding processing on the geometry bitstream to reconstruct geometry coordinate information of each point in a point cloud, and performs decoding processing on the attribute bitstream to reconstruct attribute information of each point in the point cloud.

The decoding process performed by the decoder 300 is as follows:
1. Entropy decoding (Entropy Decoding): Entropy decoding is separately performed on a geometry bitstream and an attribute bitstream to obtain geometry syntax elements and attribute syntax elements.
2. Geometry decoding: For the AVS-PCC encoding framework, geometry decoding includes two modes: octree (Octree)-based geometry decoding and prediction tree geometry decoding. For the G-PCC encoding framework, geometry encoding includes three modes: octree-based geometry decoding, trisoup (Trisoup)-based geometry decoding, and prediction tree prediction decoding.

Octree-based geometry decoding: An octree is reconstructed based on geometry syntax elements parsed from a geometry bitstream.

Prediction tree geometry decoding: A prediction tree is reconstructed based on geometry syntax elements parsed from a geometry bitstream.

Trisoup-based geometry decoding: A triangle model is reconstructed based on geometry syntax elements parsed from a geometry bitstream.

3. Geometry reconstruction: Reconstruction is performed to obtain the geometry coordinate information of points in a point cloud.

4. Coordinate inverse transform: Inverse transform is performed on the reconstructed geometry coordinate information to convert the reconstructed coordinates (positions) of points in a point cloud from the transform domain back to the original domain.

5. De-quantization: De-quantization is performed on the attribute syntax elements.

6. Attribute information processing: In AVS-PCC, attribute information processing is to determine the color information of points in a point cloud through prediction or prediction transform on de-quantized predicted residuals or predicted residual transform coefficients, or to determine the color information of points in a point cloud through transform on de-quantized transform coefficients.

In MPEG G-PCC, attribute information processing is to determine the color information of points in a point cloud through RAHT on the de-quantized attribute information, or to determine the color information of points in a point cloud through LOD and inverse lifting on the de-quantized attribute information.

7. Color inverse transform: Color information is transformed from the YCbCr color space to the RGB color space. In some examples, the color inverse transform operation may not be performed.

The following describes the technologies related to embodiments of this application.

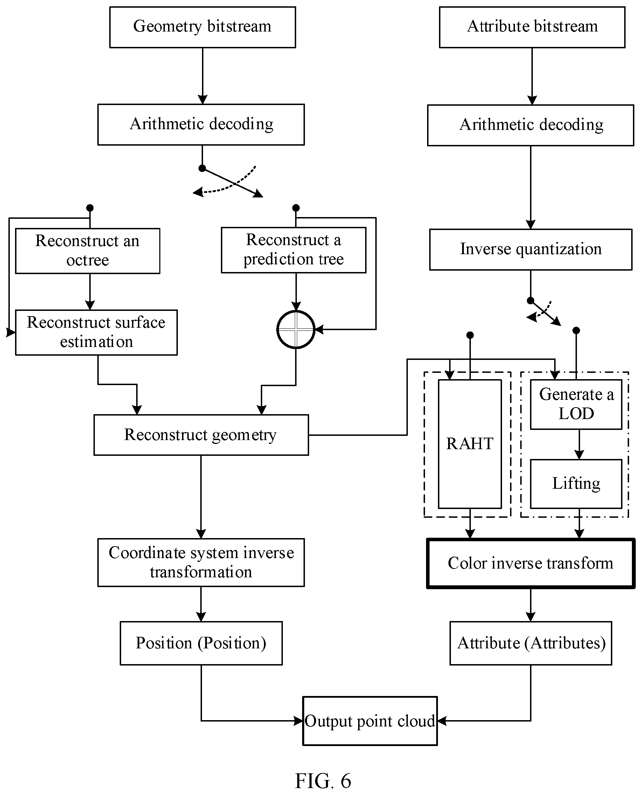

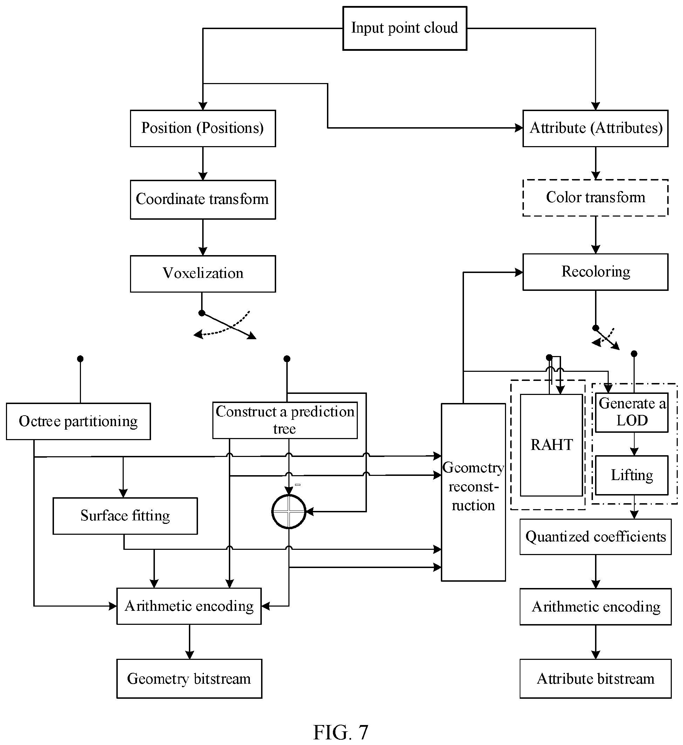

In the point cloud G-PCC-based encoder framework, the geometry information and attribute information of the point cloud are encoded separately. As shown in FIG. 1, current G-PCC attribute encoding may be divided into region adaptive hierarchical transform based on upsampling prediction (dashed box parts in FIGS. 6 and 7), lifting transform based on hierarchical structure (dotted line parts in FIGS. 6 and 7), and predictive transform based on hierarchical structure.

The region adaptive hierarchical transform based on upsampling prediction includes the following steps: First, a transform tree structure is constructed. Starting from a bottom layer, an octree structure is constructed from bottom to top. In a process of constructing the transform tree, corresponding Morton code information, attribute information, and weight information need to be generated for a merged node. Then, starting from a root node, upsampling prediction and region adaptive hierarchical transform (Region Adaptive Harr Transform, RAHT) are performed layer by layer from top to bottom. If a current node is the root node, no upsampling prediction is performed, and RAHT transform is directly performed on the attribute information of the node, and then quantization and entropy encoding are performed on a direct current coefficient and an alternating current coefficient that are obtained through transform. If the current node is not the root node, whether to predict the current node is determined based on quantities of grandparent nodes and parent nodes. If prediction is needed, for a child node of the current to-be-encoded node, weighted prediction is performed on a parent node of the current to-be-encoded child node, a neighbor parent node coplanar and collinear with the current to-be-encoded child node, and a neighbor child node coplanar and collinear with the current to-be-encoded child node to obtain a predicted attribute value of the current to-be-encoded child node, then RAHT transform is separately performed on the predicted attribute value and an original attribute value of the current to-be-encoded node, an AC coefficient residual is obtained through calculation, and quantization and entropy encoding are performed on the AC coefficient residual. If no prediction is needed, RAHT transform is directly performed on the original attribute value of the current to-be-encoded node, quantization and entropy encoding are performed on the obtained AC coefficient. Finally, an attribute bitstream is obtained.

The lifting transform based on hierarchical structure includes: determining sorting of points in a to-be-encoded point cloud based on geometry information of the to-be-encoded point cloud and a space-filling curve. The sorting method includes but is not limited to Morton sorting or Hilbert sorting. A specific embodiment is: calculating, based on coordinate information of the to-be-encoded point cloud, a Morton code corresponding to each point; and performing sorting in ascending order. Specifically, a variable *Pᵢ* is used to represent a point in an input point cloud, and a variable *Mᵢ* is a Morton code related to *Pᵢ*, where i = 1,2, ... , *N*. Each dimension component of geometry three-dimensional coordinates *x, y,* z of a point is represented by a d-bit binary number: $x = {\sum }_{l = 1}^{d} {2}^{d - l} {x}_{l} , y = {\sum }_{l = 1}^{d} {2}^{d - l} {y}_{l} , z = {\sum }_{l = 1}^{d} {2}^{d - l} {xz}_{l} .$

*xₗ, yₗ, zₗ* ∈ {0,1} are binary values corresponding to a most significant bit (*l* = 1) to a least significant bit (*l = d*) *of x, y, z* respectively. Interleaved arrangement in the form of *xₗyₗzₗx*_{*l+*1}*y*_{*l+*1}*z*_{*l+*1} ... is performed on *x, y, z* starting from a most significant bit to a least significant bit. A calculation formula of the Morton code M is as follows: $M = {\sum }_{l = 1}^{d} {2}^{3 \left(d-l\right)} \left(4{x}_{l}+2{y}_{l}+{z}_{l}\right) = {\sum }_{l ′ = 1}^{3 d} {2}^{3 d - l ′} {m}_{l ′} .$

*m_{l'}* ∈ {0,1} are values of a most significant bit (*l'* = 1) to a least significant bit (*l'* = 3d) of M respectively. After the Morton code *M* of each point in the point cloud is obtained, the points are rearranged in ascending order of the Morton codes.

Level of detail division (Level of Detail, LOD) is performed on the to-be-encoded point cloud using the following downsampling method based on information after geometry sorting, including but not limited to, based on a distance, a sampling rate, and an octree structure, to establish a hierarchical structure of the point cloud. In some specific embodiments, the division method based on a sampling rate is as follows: To divide the point cloud into four level of details, indices of points obtained by Morton value sorting can be sampled at a rate of y times, one point in every y indices is divided into a refinement level, and the rest are sampled into a lowest level LOD₀. For each additional refinement level, the rest points in the point indices that have not been sampled continue to be sampled at a rate of y times, one point in every y indices is divided into a new refinement level, and the rest are all sampled into a level of detail LOD₁. This iteration continues until all points are sampled to obtain a highest level of detail LOD_{N}, thereby constructing a final LOD structure of the point cloud.

Then, points that have been encoded and reconstructed are searched based on the geometry information for nearest neighbors of the to-be-encoded point, to predict the to-be-encoded point, so as to achieve progressive encoding.

A point at a low level and a reconstructed point at the same level can be used to predict a point at a high level, where the point at the low level and the point at the same level are used as reference points. A specific embodiment is: For a to-be-encoded point at LODₘ (m = 1, 2, ..., (N - 1), where N is a total quantity of LODs obtained through division), with encoded points at LOD₀ to LOD(_{m - 1)} as a reference set, the point set is searched for points within a range, a geometry distance between each point and the to-be-encoded point is calculated, and K points with a closest geometry distance is selected to construct a prediction point set of the current to-be-encoded point; then, with encoded points at LODₘ, that is, at the same level, as a reference set, the point set is searched for points within a range, a geometry distance between each point and the to-be-encoded point is calculated, and K points with a geometry distance closest to the to-be-encoded point among all reference points are finally selected as a prediction point set of the to-be-encoded point. However, for a to-be-encoded point at LOD₀, with an encoded point at LOD₀ as a reference point, search for a nearest neighbor is performed within a range. The above search ranges are all related to a position of the current to-be-encoded point.

In the case of a multi-frame point cloud, reconstructed points in an encoded frame may also be searched for a nearest neighbor of the current to-be-encoded point for attribute prediction. A specific embodiment may be: setting a Morton code of the current to-be-encoded point to be q; in a previous encoded frame, finding, according to a point index order of the frame, the first point whose Morton code is greater than or equal to q; searching for points within a range by using all points at a LOD level in which the point is located as a reference point set; calculating a geometry distance between each point and the to-be-encoded point; and performing distance comparison with neighbor points found in the same frame, to select the final K prediction points.

Due to complexity of point cloud distribution, currently, in terms of searching for a nearest neighbor, not only a distance issue is considered, but after the K neighbor points of the to-be-encoded point are found, orientation distribution needs to be determined, so that the neighbor distribution can be multi-directional to improve prediction accuracy. A related method is as follows:

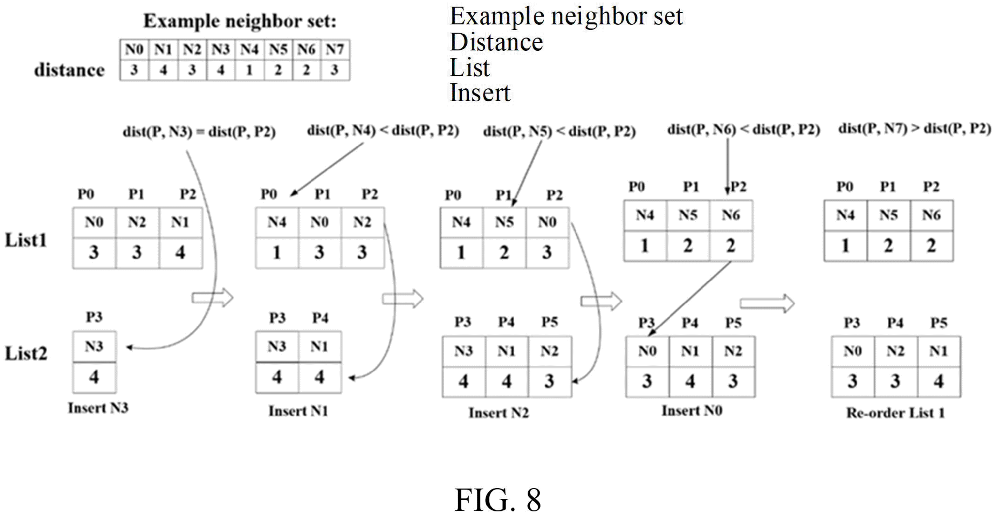

First, List1 includes K nearest neighbors obtained using an existing GPCC neighbor search method, and List2 includes N points discarded in a process of nearest-neighbor update, for example, N = 3. A process of generating List1 and List2 is shown in FIG. 8:

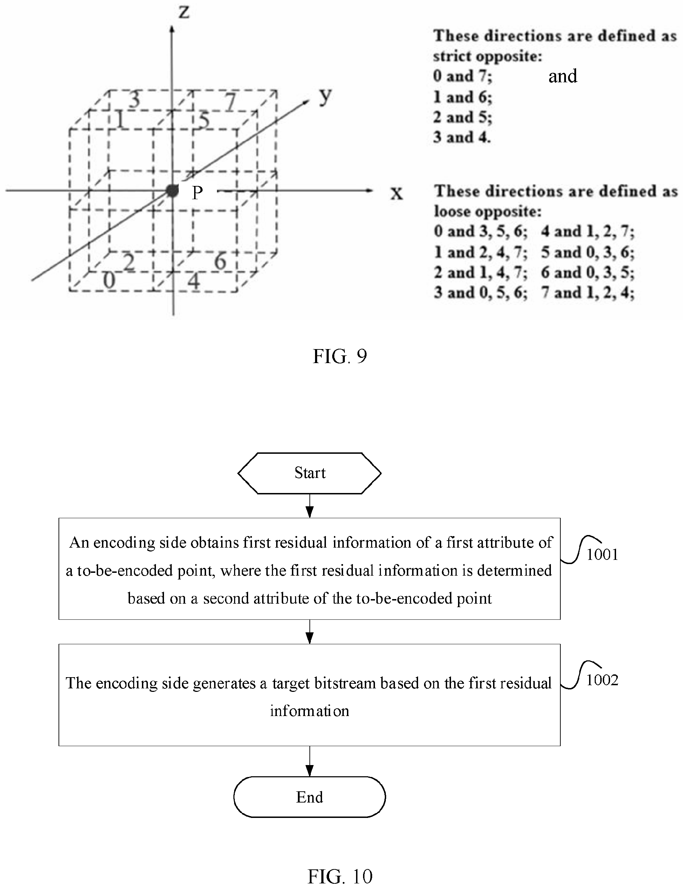

If none of points in List1, such as P1 and P2, P1 and P0, P2 and P0 in the figure, are strict opposite in direction, it indicates that the neighbor distribution is not wide enough. Therefore, List2 needs to be sequentially searched according to an order of candidate points in List2 to check if there is a candidate point that is strict opposite a point in List1 in orientation. If there is such a candidate point and a geometry distance restriction is satisfied, the search is stopped and the candidate point is used to update a nearest neighbor point in List1 that is farthest from the current to-be-encoded point. If there is no such a candidate point, and at least one pair of points among the points in List1, such as P1 and P2, P1 and P0, P2 and P0 in the figure are loose opposite in direction; in this case, there is no need to update a farthest nearest neighbor; otherwise, List2 needs to be sequentially searched according to an order of candidate points in List2 to check if there is a candidate point that is loose opposite a point in List1 in orientation. If there is such a candidate point and a geometry distance restriction is satisfied, the search is stopped and the candidate point is used to update a nearest neighbor point in List1 that is farthest from the current to-be-encoded point. The points in the above List2 are used only for checking an orientation relationship with a point in List1 that does not include a farthest nearest neighbor point, and satisfying a geometry distance restriction is to prevent a candidate point that is excessively far from the current to-be-encoded point from replacing a farthest nearest neighbor point in List1, otherwise prediction performance is affected. As shown in the figure, it is checked if there is a point in List2 that is opposite P0 or P1 in List1 in orientation. For example, Pn in List2 is opposite P0 in orientation distribution, which may be loose opposite or strict opposite. In addition, dist(Pn,p) ≤ w*dist(P2,p), where dist(Pn,p) represents a geometry information distance between Pn and the current to-be-encoded point p, dist(P2,p) represents a geometry information distance between P2 and the current to-be-encoded point p, and Pn is used to replace P2. The above w << 5 = 54. In some specific instances, orientation determining is as shown in FIG. 9.

Finally, K neighbor points selected based on the geometry information are used as prediction points, and linear interpolation prediction is performed using reconstructed attribute values of these K nearest neighbors to obtain a predicted attribute value of a to-be-predicted point, where K is a configurable parameter of the encoder and is included in a bitstream generated by the encoder, so that the decoding side can recognize it. Specifically, the encoder can use the following formula to predict the attribute information of the to-be-predicted point: ${A}_{i} = {\sum }_{j = 1}^{k} {w}_{j} {A}_{j}$

Aᵢ is a predicted attribute value of a current point, K is a quantity of neighbor points, Aⱼ is a reconstructed attribute value of a neighbor point, and wⱼ is a weight coefficient corresponding to the neighbor point, which is generally given by the following formula: ${w}_{j} = \frac{f \left({a}_{ij}\right)}{{\sum }_{j = 1}^{k} f \left({a}_{ij}\right)}$

aᵢⱼ is a distance between a neighbor point and the to-be-predicted point. f(aᵢⱼ) is a function related to aᵢⱼ. That is, according to a distance between each neighbor point and the to-be-predicted point, correlation weakens as the distance increases, so a larger weight is given to a reconstructed attribute value of a neighbor point with a smaller distance.

The lifting transform includes three parts: splitting, prediction, and update. In the splitting stage, input point cloud data is spatially partitioned into a high-level point cloud and a low-level point cloud. In the prediction stage, attribute information of the high-level point cloud is predicted using attribute information of the low-level point cloud to obtain predicted residuals. In the splitting and prediction process, because a prediction strategy in LOD division results in points in lower LOD being used for prediction more frequently and having higher weights, an influence weight of each point needs to be defined and recursively updated based on a predicted residual and a distance between a prediction point and its neighbor, thereby updating the predicted residuals, and adaptive quantization needs to be performed on updated predicted residuals using the influence weights calculated in the transform process (an attribute residual value of a low-influence point, that is, a point used as a nearest neighbor less frequently is highly quantized to improve compression efficiency, and an attribute residual value of a high-influence point, that is, a point used as a nearest neighbor more frequently is lowly quantized to improve encoding quality). Finally, the quantized residuals are entropy encoded to obtain an attribute bitstream.

Compared with the above lifting transform based on hierarchical structure, the prediction transform based on hierarchical structure includes only includes splitting and prediction, and does not include update. Rate-distortion optimization technology (RDO) is introduced to further improve point cloud attribute prediction efficiency. Rate-distortion optimization is used to select a prediction mode with best performance. Before an attribute value of the current to-be-encoded point is predicted, a largest difference between the attribute value of the current to-be-encoded point and attribute values of nearest neighbor points corresponding to the current to-be-encoded point is calculated. If the largest difference between the attributes is greater than a specified threshold, rate-distortion optimization can be applied. A predicted value obtained when each neighbor point is used individually and a predicted value obtained when all neighbor points are used for weighting are calculated, and correspond to different prediction modes respectively, to select a prediction mode through rate-distortion optimization. Finally, the selected prediction mode and quantized residuals are jointly encoded into an attribute information bitstream. In some embodiments, if no rate-distortion optimization process is specified in the encoding bitstream, the decoder can apply a default prediction mode, that is, a weighted average mode of neighbor points.

The encoding method, decoding method, apparatus, and electronic device provided by embodiments of this application are described in detail below in conjunction with the accompanying drawings through some embodiments and their application scenarios.

As shown in FIG. 10, an embodiment of this application provides an encoding method. The method includes the following:
Step 1001: The encoding side obtains first residual information of a first attribute of a to-be-encoded point, where the first residual information is determined based on a second attribute of the to-be-encoded point.

The second attribute is an encoded attribute, the first attribute is a to-be-encoded attribute, and an attribute type of the first attribute is different from that of the second attribute.

Optionally, the second attribute may be one type of attribute or two or more types of attributes.

The attribute type mentioned in embodiments of this application may include but is not limited to color, reflectance, and the like of a point cloud. For example, the first attribute may be color, and the second attribute may be reflectance.

Step 1002: The encoding side generates a target bitstream based on the first residual information.

It should be noted that, in embodiments of this application, cross attribute prediction is achieved by using the encoded attribute with a type different from that of the to-be-encoded attribute of the to-be-encoded point to obtain a residual of the to-be-encoded attribute. Fully considering the encoded second attribute in a process of encoding the first attribute reduces information redundancy in a bitstream, and achieves efficient attribute redundancy reduction, thereby reducing a bit rate and improving encoding efficiency.

Optionally, in an implementation, a specific implementation of obtaining the first residual information of the first attribute of the to-be-encoded point includes:
Step S11: The encoding side obtains a predicted attribute value of the first attribute of the to-be-encoded point, where the predicted attribute value is determined based on the second attribute of the to-be-encoded point.
Step S12: The encoding side determines the first residual information of the first attribute of the to-be-encoded point based on the predicted attribute value.

It should be noted that, in this case, the second attribute of the to-be-encoded point is used for attribute prediction of the first attribute, making the attribute prediction more accurate. Then, the residual information is obtained based on a predicted attribute, and the residual information is information that needs to be encoded into the target bitstream.

A specific implementation of step S11 is described in detail below.

Case 1: Perform attribute prediction via a nearest neighbor point, to improve attribute correlation between the to-be-encoded point and the neighbor point, and improve encoding efficiency.

Optionally, in an implementation, the specific implementation of step S11 includes:
Step S1101: The encoding side obtains an overall distance between the to-be-encoded point and each neighbor point in a first prediction point set under the condition of determining to use cross attribute prediction for the first attribute, where the overall distance is determined based on the second attribute of the to-be-encoded point and a second attribute of the neighbor point.

It should be noted that the first prediction point set includes K neighbor points of the to-be-encoded point. For example, the first prediction point set may include K neighbor points selected from a LOD structure based on geometry information. For a specific selection method, reference may be made to the above description of the related technologies of this application, and details are not described herein again. Certainly, the first prediction point set may be obtained by using another obtaining method in embodiments of this application. It should be noted herein that embodiments of this application do not impose many limitations on how to obtain the first prediction point set, and any method that can be used to obtain the first prediction point set belongs to the protection scope of this application.

It should be noted that the overall distance is a distance jointly determined by a geometry distance and an attribute distance between the to-be-encoded point and each neighbor point. This overall distance can reflect a degree of correlation between the to-be-encoded point and each neighbor point.

Optionally, in an implementation, a specific implementation of this step includes:
Step S11011: The encoding side obtains a geometry distance between the to-be-encoded point and each neighbor point in the first prediction point set.

Optionally, in embodiments of this application, the geometry distance can be obtained according to Equation 1.$geomDis = dis \left(geomCur, geomNeighbour\right) .$

geomCur represents a geometry position of the to-be-encoded point. geomNeighbour represents a geometry position of a neighbor point. A spatial dimension represented by the geometry position includes but is not limited to Cartesian coordinates, spherical coordinates, cylindrical coordinates, or the like of the point cloud. The function dis(geomCur,geomNeighbour) represents a distance between geomCur and geomNeighbour. For example, the distance can be Euclidean distance or Manhattan distance.

It should be noted that, in this step, how many neighbor points are included in the first prediction point set indicates how many geometry distances are obtained. For example, if the first prediction point set includes K neighbor points, for each neighbor point, the encoding side obtains one geometry distance between the to-be-encoded point and this neighbor point, so the encoding side obtains K geometry distances.

Step S11012: The encoding side obtains an attribute distance between the second attribute of the to-be-encoded point and a second attribute of each neighbor point in the first prediction point set.

Optionally, in an implementation, a specific implementation of this step includes:
The encoding side determines the attribute distance between the second attribute of the to-be-encoded point and the second attribute of each neighbor point in the first prediction point set based on a quantity of components included in a second attribute and a weight occupied by each component during attribute distance calculation.

It should be noted that obtaining the attribute distance based on the quantity of components and the weight occupied by the component can ensure that the encoding side accurately obtains the attribute distance.

Optionally, in embodiments of this application, the attribute distance can be obtained according to Equation 2.$attrDis = dis \left(attrCur, attrNeighbour\right) .$

attrCur represents attribute information of the second attribute of the to-be-encoded point. attrNeighbour represents attribute information of a second attribute of a neighbor point. The attribute information includes but is not limited to color, reflectance, or the like of the point cloud. The function dis(attrCur,attrNeighbour) represents an attribute distance between attrCur and attrNeighbour. For example, the attribute distance may be Euclidean distance or Manhattan distance.

Optionally, a specific method for obtaining the attribute distance in embodiments of this application is shown in Equation 3:
$attrDis = \frac{{\sum }_{i = 0}^{i = dimAttr - 1} wAttr \left[i\right] ⋅ \left|attrCur\left[i\right]-attrNeighbour\left[i\right]\right|}{{\sum }_{i = 0}^{i = dimAttr - 1} wAttr \left[i\right]} .$

dimAttr represents a quantity of components of a second attribute, which may also be understood as a quantity of components included in attribute information of the second attribute. attrCur[i] represents an i^{th} component of the second attribute of the to-be-encoded point. attrNeighbor[i] represents an i^{th} component of a second attribute of a neighbor point. wAttr[i] represents a weight occupied by the i^{th} component of the second attribute during attribute distance calculation.

Step S11013: The encoding side determines the overall distance between the to-be-encoded point and each neighbor point in the first prediction point set based on the geometry distance and the attribute distance of the neighbor point.

It should be noted that obtaining the overall distance based on the geometry distance and the attribute distance can cause the encoding side to consider correlation between different types of attributes during neighbor point-based attribute prediction, and this can improve encoding efficiency.

Optionally, in an implementation, a specific implementation of this step includes:
The encoding side determines the overall distance between the to-be-encoded point and each neighbor point in the first prediction point set based on the geometry distance, a weight corresponding to the geometry distance, the attribute distance, and a weight corresponding to the attribute distance.

It should be noted that calculating the overall distance based on the distance and the weight occupied by the distance can ensure that the encoding side accurately obtains the overall distance, thereby ensuring attribute prediction accuracy.

Optionally, in embodiments of this application, the overall distance can be obtained according to Equation 4. $\begin{matrix}overalldis = geomW ⋅ geomDis + \\ {\sum }_{i = 0}^{i = codedAttrNum - 1} attrW \left[i\right] ⋅ attrDis \left[i\right] .\end{matrix}$

overalldis represents an overall distance. geomDis represents a geometry distance. attrW[i] represents an attribute distance of an i^{th} second attribute. codedAttrNum represents a quantity of second attributes. attrW[i] represents a weight of the attribute distance corresponding to the i^{th} second attribute in calculation of the overall distance (attrW[i] ≥ 0). If attrW[i] = 0, it indicates that the first attribute does not reference this encoded attribute. For example, in a specific embodiment of embodiments of this application, only one encoded attribute is referenced. If a current to-be-encoded attribute is A, and the encoded attributes are B, C, D, when weights attrW[c] and attrW[d] of C and D during attribute distance calculation are 0, it indicates that the attributes C and D are not referenced.

attrW[i] can be obtained according to Equation 5:
$attrW \left[i\right] = k ⋅ attrQuantParam + b .$

k and b are any real numbers, and attrQuantParam represents an attribute quantization parameter.

It should be noted that through the above calculation process, the encoding side obtains one overall distance for each neighbor point in the first prediction point set.

Step S1102: The encoding side re-sorts the neighbor points in the first prediction point set based on the overall distances to obtain a second prediction point set.

Optionally, in an implementation, the encoding side re-sorts the neighbor points in the first prediction point set based on an ascending order of the overall distances to obtain the second prediction point set.

It should be noted that after the overall distances between the K neighbor points in the first prediction point set and the to-be-encoded point are calculated, a list of nearest neighbor points is updated by comparing values of the overall distances, that is, the K neighbor points in the first prediction point set of the to-be-encoded point are re-sorted based on the ascending order of the overall distances to obtain the re-sorted second prediction point set. It should be noted that neighbor points included in the second prediction point set are the same as those in the first prediction point set, but a weight value of each neighbor point in the second prediction point set in subsequent attribute prediction is affected due to different sorting of the overall distances.

Step S1103: The encoding side determines the predicted attribute value of the first attribute of the to-be-encoded point based on the second prediction point set.

Optionally, in an implementation, a specific implementation of this step includes:
The encoding side determines the predicted attribute value of the first attribute of the to-be-encoded point based on a reconstructed attribute value of a first attribute and a weight coefficient that are of each neighbor point in the second prediction point set.

The weight coefficient of the neighbor node is determined by the overall distance between the neighbor node and the to-be-encoded point.

It should be noted that determining the weight coefficient based on the overall distance can ensure that an obtained weight coefficient of the neighbor point can be more accurate, thereby ensuring attribute prediction accuracy.

Optionally, the weight coefficient can be obtained according to Equation 6:
${w}_{j} = \frac{f \left({d}_{ij}\right)}{{\sum }_{j = 1}^{k} f \left({d}_{ij}\right)} .$

*wⱼ* represents the weight coefficient. dᵢⱼ is an overall distance between a neighbor point and the to-be-encoded point. f(dᵢⱼ) is a function related to dᵢⱼ. That is, based on an overall distance between each neighbor point and the to-be-encoded point, as the overall distance increases, correlation weakens, so a larger weight is given to a reconstructed attribute value of a neighbor point for a smaller overall distance, and a smaller weight is given to a reconstructed attribute value of a neighbor point for a larger overall distance.

Optionally, the predicted attribute value of the first attribute of the to-be-encoded point can be obtained according to Equation 7:
$predAttr = \frac{{\sum }_{i = 0}^{i < nearestNeighNum} w \left[i\right] ⋅ reconAttr \left[i\right]}{{\sum }_{j = 0}^{j < nearestNeighNum} w \left[i\right]} .$

predAttr represents the predicted attribute value of the first attribute of the to-be-encoded point. nearestNeighNum represents a quantity of nearest neighbor points finally selected for predicting the to-be-encoded point. reconAttr[i] represents a reconstructed attribute value of a first attribute of an i^{th} nearest neighbor point.

It should be noted that after the predicted attribute value is obtained, the first residual information of the first attribute can be obtained based on original information and the predicted attribute value of the first attribute. Usually, the original information of the first attribute minus the predicted attribute value can obtain the first residual information, and the first residual information is encoded into the target bitstream to achieve information encoding.

Optionally, in an implementation, the target bitstream includes first indication information and second indication information. The first indication information indicates whether the encoding side uses cross attribute type prediction, and the second indication information indicates whether to use cross attribute prediction for the first attribute.

Specifically, whether the encoding side uses cross attribute type prediction and whether to use cross attribute prediction for the first attribute may be pre-configured, or may be determined by the encoding side based on implementation. For example, if there is an encoded attribute of a different type before a current attribute is encoded, cross attribute prediction can be used for the current to-be-encoded attribute, that is, the encoded attribute of the different type is introduced in attribute prediction to measure correlation between the to-be-encoded point and a neighbor point, so as to improve attribute encoding efficiency.

Usually, after receiving the target bitstream, a decoding side decodes the received target bitstream to obtain the first indication information. The decoding side obtains the second indication information from the target bitstream under the condition of the first indication information indicating the encoding side to use cross attribute type prediction. The decoding side determines, under the condition of the second indication information indicating to use cross attribute prediction for the first attribute, to use cross attribute prediction for the first attribute.

Optionally, the decoding side also needs to use the same method as the encoding side to determine the predicted attribute value of the first attribute. For details, reference may be made to the above description, and details are not described herein again.

The following is an example of specific application of the above case.

Specific implementation scheme of the encoding side:
First, an enable flag cross_attr_prediction_enabled_flag of cross attribute type prediction, that is, the first indication information, is introduced in a sequence parameter set, to control a codec whether to enable cross attribute type prediction. When the flag is enabled (for example, the flag is 1), cross_attr_type_prediction_enabled_flag, that is, the second indication information for controlling whether cross attribute prediction can be used for the attribute, is introduced in an attribute parameter set corresponding to each to-be-encoded attribute. If there is an encoded attribute of a different type before a current attribute is encoded, cross attribute prediction can be used for the current to-be-encoded attribute, that is, encoded attribute information of a different type is introduced in attribute prediction to measure correlation between a to-be-predicted point and a neighbor point, to improve attribute encoding efficiency.

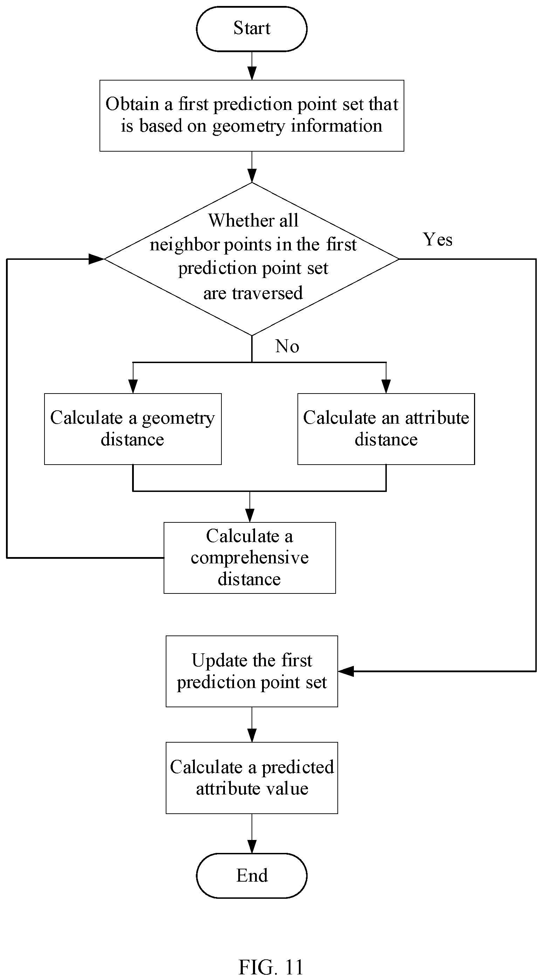

When cross_attr_type_prediction_enabled_flag is enabled, attrRefIdx is introduced in an attribute parameter set of the current to-be-encoded attribute, to indicate which encoded attributes of a different type are used for prediction encoding of the current to-be-encoded attribute. attrRefIdx represents an encoded attribute appearing in a bitstream. A rank of the current to-be-encoded attribute among all attributes should be greater than that of the encoded attribute indicated by attrRefIdx, that is, an attribute referenced by the cross attribute prediction used needs to be an encoded attribute. As shown in FIG. 11, a specific encoding method is described as follows:
Step I: Obtain the second prediction point set based on geometry information and attribute information.

Input: the first prediction point set including the K neighbor points of the to-be-encoded point selected from the LOD structure based on the geometry information.

Output: the second prediction point set obtained by updating the to-be-encoded point based on the geometry information and the attribute information.

Specifically, the following steps are included:
Step 1: Calculate the overall distance.

Input: reconstructed geometry information of the to-be-encoded point and the first prediction point set corresponding to the to-be-encoded point, and previously encoded reconstructed information of a different attribute type.

Output: the overall distance between the to-be-encoded point and each neighbor point in the first prediction point set.

The specific implementation includes:
traversing the K nearest neighbor points in the first prediction point set, and calculating the geometry distance (geomDis) between each neighbor point and the current to-be-encoded point, where the geometry distance is specifically obtained according to Equation 1;
calculating a distance (attrDis) between an attribute of each neighbor point and a previously encoded attribute of a different type of the current to-be-encoded point, where the attribute distance can be obtained according to Equation 3; and
after obtaining the attribute distances and the geometry distances, obtaining the overall distances through calculation via joint use of the two to enhance correlation of attribute information between the current point and the neighbor points, so as to improve prediction performance, where the overall distance (overallDis) can be obtained according to Equation 4.

Step 2: Update the first prediction point set.

Input: the first prediction point set corresponding to the to-be-encoded point.

Output: the second prediction point set obtained by sorting the to-be-encoded point.

After the overall distances between the K neighbor points and the current to-be-encoded point are obtained through calculation, a list of nearest neighbor points is updated by comparing values of the overall distances, that is, the first prediction point set of the to-be-encoded point are re-sorted in ascending order of the overall distances, to obtain the second prediction point set.

Step II: Calculate the predicted attribute value.

Input: a reconstructed attribute value of a same type of the nearest neighbor points.

Output: the predicted attribute value of the to-be-encoded point.

The weight coefficient occupied by each neighbor point in the K nearest neighbor points finally selected for prediction is determined based on the value of the overall distance, and weighted average of attribute values is performed to obtain the predicted attribute value of the to-be-encoded point. In some specific instances, for example, in prediction transform, if it is determined that a largest difference between current to-be-encoded attributes of the to-be-encoded point and the nearest neighbor points exceeds a certain threshold, only one of the nearest neighbor points can be selected based on a rate-distortion criterion for prediction. At this time, a reconstructed attribute value of the selected nearest neighbor point is used as a predicted value of the current to-be-encoded point. If the largest difference between the current to-be-encoded attributes does not exceed the threshold or is in lifting transform, weighted calculation is performed on reconstructed attribute values of the nearest neighbors to obtain the predicted attribute value of the current to-be-predicted point. The predicted attribute value can be obtained according to Equation 7.

Step III: Calculate an attribute residual and perform entropy encoding.

Input: the predicted attribute value and original attribute information (that is, an original attribute value) of the to-be-encoded point.

Output: the target bitstream including an encoded value of the attribute residual.

After the predicted attribute value of the current to-be-encoded point is obtained, verification is performed with a corresponding attribute value of a point in an original uncompressed point cloud (for example, a captured point cloud) to obtain the attribute residual, that is, the first residual information. The above verification process may be: subtracting the predicted value from the original value to obtain an attribute residual, and quantizing a finally determined attribute residual. In the above lifting transform method, the obtained attribute residual needs to be updated to determine the final attribute residual, and adaptive quantization is performed on the final residual, so that an attribute residual value of a low-influence point, that is, a point used as a nearest neighbor less frequently is highly quantized to improve compression efficiency, and an attribute residual value of a high-influence point, that is, a point used as a nearest neighbor more frequently is lowly quantized to improve encoding quality. In the encoding method that uses rate-distortion optimization to select a prediction mode, a prediction mode corresponding to each point and a quantized attribute residual are jointly encoded, and then a jointly encoded value is entropy encoded for compression into the target bitstream. An entropy encoding type includes but is not limited to arithmetic encoding technology and exponential Golomb encoding technology.

Correspondingly, an implementation process of the decoding side is as follows:
The decoding side performs parsing to obtain a target bitstream (that is, a binary bitstream), to obtain a cross attribute type prediction enable flag cross_attr_prediction_enabled_flag in a sequence parameter set. When the flag is enabled (for example, the flag is 1), a flag cross_attr_type_prediction_enabled_flag in an attribute parameter set corresponding to each type of to-be-decoded attribute is obtained through parsing. When cross_attr_type_prediction_enabled_flag is enabled (for example, the flag is 1), attrRefIdx of an attribute type that a current attribute needs to reference is obtained through parsing. After parsing of the above information is completed, the following decoding process is performed:
Step I: Construct a second prediction point set.

Input: a first prediction point set, of a to-be-decoded point, constructed based on geometry information in a LOD structure.

Output: the second prediction point set, of the to-be-decoded point, obtained through update based on the geometry information and attribute information.

Step 1: Calculate an overall distance.

Input: reconstructed geometry information of the to-be-decoded point and a first prediction point set corresponding to the to-be-decoded point, and decoded reconstructed information of a different attribute type.

Output: an overall distance between the to-be-decoded point and each neighbor point in the first prediction point set.

K nearest neighbor points in the first prediction point set are traversed, and a geometry distance (geomDis) between each neighbor point and the current to-be-decoded point is calculated. The geometry distance is obtained according to Equation 1.

In addition, a distance (attrDis) between an attribute of each neighbor point and a previously decoded attribute of a different type of the current to-be-decoded point is calculated. The attribute distance can be obtained according to Equation 3.

After the attribute distances and the geometry distances are obtained, the overall distances are obtained through calculation via joint use of the two to enhance correlation of attribute information between the current point and the neighbor points and improve prediction performance. The overall distance (overallDis) can be obtained according to Equation 4.

Step 2: Update the first prediction point set.

Input: the first prediction point set corresponding to the to-be-decoded point.

Output: the second prediction point set obtained by sorting the to-be-decoded point.

After the overall distances between the K neighbor points and the current to-be-decoded point are obtained through calculation, a list of nearest neighbor points is updated by comparing values of the overall distances, that is, the first prediction point set of the to-be-decoded point is re-sorted in ascending order of the overall distances, to obtain the second prediction point set.

Step II: Obtain a true predicted residual of the to-be-decoded point.

Input: a target bitstream corresponding to an attribute.

Output: first residual information of the to-be-decoded point.

An attribute bitstream including an initial attribute residual value of a point is entropy decoded to obtain an initial attribute residual of the point, that is, the first residual information, where entropy decoding types include but are not limited to arithmetic decoding technology and exponential Golomb decoding technology. In lifting transform, after de-quantization of the initial attribute residual, inverse lifting transform is performed to obtain an original attribute residual value of the to-be-decoded point. In some specific instances, the initial attribute residual also needs to be decoded to obtain a prediction mode and an original predicted residual value of the to-be-decoded point through calculation, and a de-quantized residual needs to be used for subsequent prediction reconstruction.

Step III: Calculate a predicted value and a reconstructed value.

Input: a reconstructed attribute value of a same type of a nearest neighbor point and the first residual information of the to-be-decoded point.

Output: a reconstructed attribute value of the to-be-decoded point.

A nearest neighbor point for prediction is selected based on the prediction mode corresponding to the current to-be-decoded point. Prediction weights occupied by all nearest neighbor points are determined by values of overall distances, and then weighted average is performed to obtain a predicted attribute value of the current to-be-decoded point. Weighted sum is performed on reconstructed attribute values of the nearest neighbor points by weights to obtain a predicted attribute value (predAttr) of a current to-be-predicted point. The predicted attribute value can be obtained according to Equation 7.

If the neighbor point selected for prediction is only one point in a nearest-neighbor point set, an attribute value of a same type reconstructed by the point can be directly used as a predicted value of the current to-be-decoded point.

Then, the first residual information of the point is applied to the predicted attribute value of the current to-be-decoded point to obtain the reconstructed attribute value of the point, thereby achieving decoding.

It should be noted that this implementation can improve attribute correlation between the to-be-encoded point and the neighbor point and improve encoding efficiency. Correspondingly, the decoding side can also improve decoding efficiency.

Case 2: Perform fitting by using correlation between different types of attributes, to obtain a predicted attribute value.

Optionally, in an implementation, a specific implementation of step S11 includes:
Step S1111: The encoding side determines a first objective function based on original information of a second attribute and original information of a first attribute of a reference point set of the to-be-encoded point.

It should be noted that one first objective function can be determined through fitting based on an encoded attribute of a point in the reference point set and original information of the to-be-encoded attribute, where parameter information in the first objective function is determined through fitting and solution. Optionally, the reference point set of the to-be-encoded point is a reference point set corresponding to the to-be-encoded point. It should be noted that, to improve fitting accuracy, optionally, in embodiments of this application, the first objective function is obtained by using a piecewise fitting method. For example, 10000 points are included, and these points are partitioned into segments, with each segment including 1000 points. When the to-be-encoded point belongs to a specific segment, a reference point set corresponding to the to-be-encoded point is a point set corresponding to this segment. Optionally, the reference point set may include the to-be-encoded point, a point with a first attribute not encoded, and a point with a second attribute encoded.

It should be noted that the original information is attribute information of an original point cloud, that is, an original value of the first attribute and original information of the second attribute.

Step S1112: The encoding side determines the predicted attribute value of the first attribute of the to-be-encoded point based on the first objective function and a reconstructed attribute value of the second attribute of the to-be-encoded point.

It should be noted that the reconstructed attribute value of the second attribute is obtained through reconstruction based on residual information and predicted information of the second attribute. Optionally, the predicted information of the second attribute may be obtained through prediction by using an existing method, and the residual information of the second attribute is obtained by subtracting the predicted information from the original information of the second attribute.

It should be noted that because the first objective function has been determined, the predicted attribute value of the first attribute of the to-be-encoded point can be obtained by directly substituting the reconstructed attribute value of the second attribute of the to-be-encoded point into the first objective function.

After the first residual information is obtained based on the obtained predicted attribute value of the first attribute, encoding can be performed to obtain the target bitstream. Optionally, in an implementation, the target bitstream includes parameter information of the first objective function, the first residual information, and residual information of the second attribute of the to-be-encoded point.

Optionally, the residual information of the second attribute of the to-be-encoded point is used for the decoding side to obtain a reconstructed value of the second attribute. The decoding side can obtain the predicted attribute value of the first attribute of the to-be-decoded point based on the reconstructed value of the second attribute and the parameter information of the first objective function.

After the decoding side obtains the predicted attribute value of the first attribute of the to-be-decoded point, the reconstructed attribute value of the first attribute of the to-be-decoded point can be obtained based on the first residual information. Usually, the reconstructed attribute value of the first attribute can be obtained by adding the predicted attribute value of the first attribute and the first residual information.

It should be noted that this method can improve coding efficiency.

The following is an example of specific application of this case.

A regression curve between original information of to-be-encoded attributes (that is, to-be-encoded attributes of to-be-encoded points) and original information of encoded attributes having correlation to the to-be-encoded attributes (that is, encoded attributes of encoded points) is directly piecewise fit using correlation between different types of attribute information in a multi-attribute sequence, including but not limited to linear function form. The above scheme can include: sequentially selecting L points from a to-be-encoded point cloud; composing the selected L points into a point set, where L may be a positive integer greater than or equal to 20; and determining a parameter of a model based on current to-be-encoded attribute information of these L points and encoded type attribute information having correlation to the current to-be-encoded attribute information. For example, a least squares method may be used for straight line fitting, to obtain a fitted straight line between a plurality of attributes y = ax + b.

It should also be noted that for prediction model construction, that is, straight line fitting, after the point set is selected from a spatial block, in addition to using the least squares method for straight line fitting, another method different from the least squares method may also be used for straight line fitting, such as gradient descent method or Gauss-Newton method.

For each point, a reconstructed attribute value of an encoded attribute and a prediction model are used to obtain a predicted value of a to-be-encoded attribute through calculation, and the encoding side performs verification with an original attribute value to obtain a predicted residual. An original predicted residual may still be obtained through calculation using an original encoding method. Rate-distortion optimization is performed to select one of the two modes, and a finally selected predicted residual and the selected encoding mode are jointly encoded, and encoded into a bitstream together with a parameter of each prediction model. A result obtained through calculation based on a prediction model may alternatively be directly used as a predicted attribute value of a current point when a prediction model error is quite small, thereby obtaining a predicted residual. At this time, the predicted residual and the parameters involved in the prediction models need to be encoded into the bitstream.

The decoding side obtains the parameter of each prediction model through decoding, and may select a corresponding prediction method by using information obtained through decoding, to obtain a corresponding value of the current point, and apply it to a residual obtained through decoding, to obtain a reconstructed attribute value.

Optionally, in an implementation, a specific implementation of obtaining the first residual information of the first attribute of the to-be-encoded point includes:
Step S13: The encoding side determines a second objective function based on second residual information of a second attribute and second residual information of a first attribute of a reference point set of the to-be-encoded point.

It should be noted that one second objective function can be determined by fitting second residual information of an encoded attribute and second residual information of a to-be-encoded attribute that are of a point in a reference point set, where parameter information in the second objective function is determined by fitting solution. Optionally, the reference point set of the to-be-encoded point is a reference point set corresponding to the to-be-encoded point. It should be noted that to improve fitting accuracy, optionally, the first objective function is obtained by using a piecewise fitting method in embodiments of this application. For example, 10000 points are included, and these points are partitioned into segments, with each segment including 1000 points. When the to-be-encoded point belongs to a specific segment, a reference point set corresponding to the to-be-encoded point is a point set corresponding to this segment. Optionally, the reference point set may include the to-be-encoded point, a point with the first attribute not encoded, and a point with a second attribute encoded.

It should be noted that the second residual information is residual information determined by using an existing method. Optionally, the predicted information of the second attribute may be obtained through prediction by using an existing method, and the second residual information of the second attribute is obtained by subtracting the predicted information from the original information of the second attribute.

Step S14: The encoding side determines the first residual information of the first attribute of the to-be-encoded point based on the second objective function and second residual information of the second attribute of the to-be-encoded point.

Optionally, the second residual information of the second attribute of the to-be-encoded point is residual information determined by using an existing method. Optionally, the predicted information of the second attribute of the to-be-encoded point may be obtained through prediction by using an existing method, and the second residual information of the second attribute of the to-be-encoded point is obtained by subtracting the predicted information from the original information of the second attribute of the to-be-encoded point.

Optionally, in an implementation, a specific implementation of determining, by the encoding side, the first residual information of the first attribute of the to-be-encoded point based on the second objective function and second residual information of the second attribute of the to-be-encoded point includes:
Step S141: The encoding side determines predicted residual information of the first attribute of the to-be-encoded point based on the second objective function and the second residual information of the second attribute of the to-be-encoded point.

It should be noted that because the second objective function has been determined, the predicted residual information of the first attribute of the to-be-encoded point can be obtained by directly substituting the second residual information of the second attribute of the to-be-encoded point into the second objective function.

Step S142: The encoding side determines the first residual information of the first attribute of the to-be-encoded point based on the predicted residual information of the first attribute of the to-be-encoded point and second residual information of the first attribute of the to-be-encoded point.

The first residual information can be obtained based on the second residual information after the predicted residual information is obtained. Optionally, the first residual information refers to a residual change value of the first attribute.

Optionally, after the first residual information of the first attribute of the to-be-encoded point is obtained, encoding can be performed to obtain the target bitstream. Optionally, in an implementation, the target bitstream includes parameter information of the second objective function, the first residual information of the first attribute of the to-be-encoded point, and the second residual information of the second attribute in the reference point set.

Optionally, the second residual information of the second attribute in the reference point set and the parameter information of the second objective function are used for the decoding side to obtain predicted residual information of the first attribute of the to-be-decoded point. After obtaining the predicted residual information of the first attribute of the to-be-decoded point, the decoding side can obtain an original residual of the first attribute based on the first residual information of the first attribute of the to-be-decoded point, and then reconstruct the first attribute based on the original residual and the predicted attribute value of the first attribute to obtain the reconstructed attribute value of the first attribute of the to-be-decoded point. Optionally, the predicted attribute value of the first attribute is determined by the encoding side based on an existing method.

It should be noted that in this method, the predicted residual is directly obtained by fitting, and a change value of the residual is transferred. This can reduce bitstream redundancy and improve encoding efficiency. Correspondingly, the decoding side can also improve decoding efficiency.

The following is an example of specific application of this case.

A regression curve between residuals of current to-be-encoded attributes and residuals of encoded type attributes having correlation to the current to-be-encoded attributes is directly piecewise fit using correlation between different types of attribute information in a multi-attribute sequence, including but not limited to linear function form. The above scheme can include: sequentially selecting L points from a to-be-encoded point cloud; composing the selected L points into a point set, where L may be a positive integer greater than or equal to 20; and determining a parameter of a model based on residual information of current to-be-encoded attributes of these L points and residual information of encoded type attributes having correlation to the current to-be-encoded attribute. For example, a least squares method may be used for straight line fitting, to obtain a fitted straight line between a plurality of attributes y = ax + b.

For each point, a parameter of a prediction model in which the point is located is used to represent an attribute residual of a current to-be-encoded type based on an attribute residual of an encoded type, for example, an attribute residual of the current to-be-encoded attribute type of the point y = ax + b, where x is the corresponding attribute residual of the encoded type. When a prediction model error is quite small, a residual obtained through calculation by a current model can be used to replace an original residual, and only a parameter of each prediction model is encoded into a bitstream. Alternatively, a predicted residual may still be obtained through calculation by using an original encoding method; in this case, the residual needs to be encoded. Rate-distortion optimization is performed to select one of the two modes, and a finally selected predicted residual and the selected encoding mode are jointly encoded, and encoded into a bitstream together with a parameter of each prediction model.

The decoding side obtains the parameter of each prediction model through decoding, selects a corresponding method by using information obtained through decoding, to obtain an attribute residual value of the current point, and applies it to an attribute value obtained through prediction, to obtain a reconstructed attribute value.

Simulation results obtained by applying embodiments of this application to current GPCC TMC13v23.0-rc1 are as follows.

It should be noted that left-side parameters in the following tables indicate different point cloud types. Embodiments of this application are currently implemented on a point cloud type with a plurality of attributes, such as Am-fused only at present. C1, C2, CW, and CY indicate different test conditions, and are respectively: geometry lossless, attribute lossy; geometry lossy, attribute lossy; geometry lossless, attribute lossless; and geometry lossless, attribute near lossless.
1. Tables 1 to 4 show performance results of using a color attribute to predict a reflectance attribute:

**Table 1 First performance result of using color to predict reflectance**

| C1_ai | Geometry lossless, attribute lossy [intra] | | | |
|---|---|---|---|---|
| | End-to-end attribute bit rate change rate [%] | | | |
| | Color luma component (Luma) | Color chroma component (Chroma) Cb | Color chroma component Cr | Reflectance (Reflectance) |
| Am-fused average | 0.0% | 0.0% | 0.0% | -3.6% |
| Average performance | 0.0% | 0.0% | 0.0% | -3.6% |
| Average encoding-end time complexity [%] | 100% | | | |
| Average decoding-end time complexity [%] | 100% | | | |

**Table 2 Second performance result of using color to predict reflectance**

| C2_ai | Geometry lossy, attribute lossy [intra] | | | | | |
|---|---|---|---|---|---|---|
| | End-to-end attribute bit rate change rate [%] | | | | Geometry (Geometry) bit rate change rate [%] | |
| | Luma | Chroma Cb | Chroma Cr | Reflectance | Point-to-point distortion metric | Point-to-surface distortion metric |
| Am-fused average | 0.0% | 0.0% | 0.0% | **-**2.3% | 0.0% | 0.0% |
| Average performance | 0.0% | 0.0% | 0.0% | **-**2.3% | 0.0% | 0.0% |
| Average encoding-end time complexity [%] | 99% | | | | | |
| Average decoding-end time complexity [%] | 102% | | | | | |

**Table 3 Third performance result of using color to predict reflectance**

| CW_ai | Geometry lossless, attribute lossless [intra] | | | |
|---|---|---|---|---|
| | Bit rate change rate per input point [%] | | | |
| | Geometry | Colour | Reflectance | Total |
| Am-fused average | 100.0% | 100.0% | 99.6% | 100.0% |
| Average performance | 100.0% | 100.0% | 99.6% | 100.0% |
| Average encoding-end time complexity [%] | 100% | | | |
| Average decoding-end time complexity [%] | 100% | | | |

**Table 4 Fourth performance result of using color to predict reflectance**

| CY_ai | Geometry lossless, attribute near lossless [intra] | | | |
|---|---|---|---|---|
| | End-to-end Hausdorff attribute distortion metric [%] | | | |
| | Luma | Chroma Cb | Chroma Cr | Reflectance |
| Am-fused average | 0.0% | 0.0% | 0.0% | -0.9% |
| Average performance | 0.0% | 0.0% | 0.0% | -0.9% |
| Average encoding-end time complexity [%] | 101% | | | |
| Average decoding-end time complexity [%] | 101% | | | |

2. Tables 5 to 8 show performance results of using a reflectance attribute to predict a color attribute:

**Table 5 First performance result of using reflectance to predict color**

| C1_ai | Geometry lossless, attribute lossy [intra] | | | |
|---|---|---|---|---|
| | End-to-end attribute bit rate change rate [%] | | | |
| | Luma | Chroma Cb | Chroma Cr | Reflectance |
| Am-fused average | **-**1.7% | **-**3.3% | **-**3.7% | 0.0% |
| Average performance | **-**1.7% | **-**3.3% | **-**3.7% | 0.0% |
| Average encoding-end time complexity [%] | 100% | | | |
| Average decoding-end time complexity [%] | 100% | | | |

**Table 6 Second performance result of using reflectance to predict color**

| C2_ai | Geometry lossy, attribute lossy [intra] | | | | | |
|---|---|---|---|---|---|---|
| | End-to-End BD-AttrRate [%] | | | | Geometry bit rate change rate [%] | |
| | Luma | Chroma Cb | Chroma Cr | Reflectance | D1 | D2 |
| Am-fused average | **-**1.4% | **-**3.3% | **-**4.2% | 0.0% | 0.0% | 0.0% |
| Average performance | **-**1.4% | **-**3.3% | **-**4.2% | 0.0% | 0.0% | 0.0% |
| Average encoding-end time complexity [%] | 98% | | | | | |
| Average decoding-end time complexity [%] | 100% | | | | | |

**Table 7 Third performance result of using reflectance to predict color**

| CW_ai | Geometry lossless, attribute lossless [intra] | | | |
|---|---|---|---|---|
| | Bit rate change rate per input point [%] | | | |
| | Geometry | Colour | Reflectance | Total |
| Am-fused average | 100.0% | 99.9% | 100.0% | 100.0% |
| Average performance | 100.0% | 99.9% | 100.0% | 100.0% |
| Average encoding-end time complexity [%] | 99% | | | |
| Average decoding-end time complexity [%] | 102% | | | |

**Table 8 Fourth performance result of using reflectance to predict color**

| CY_ai | Geometry lossless, attribute near lossless [intra] | | | |
|---|---|---|---|---|
| | End-to-end Hausdorff attribute distortion metric [%] | | | |
| | Luma | Chroma Cb | Chroma Cr | Reflectance |
| Am-fused average | **-**0.2% | **-**0.2% | **-**0.2% | 0.0% |
| Average performance | **-**0.2% | **-**0.2% | **-**0.2% | 0.0% |
| Average encoding-end time complexity [%] | 102% | | | |
| Average decoding-end time complexity [%] | 101% | | | |

It should be noted that compared with the conventional technology, embodiments of this application can reduce a bit rate and improve encoding efficiency.

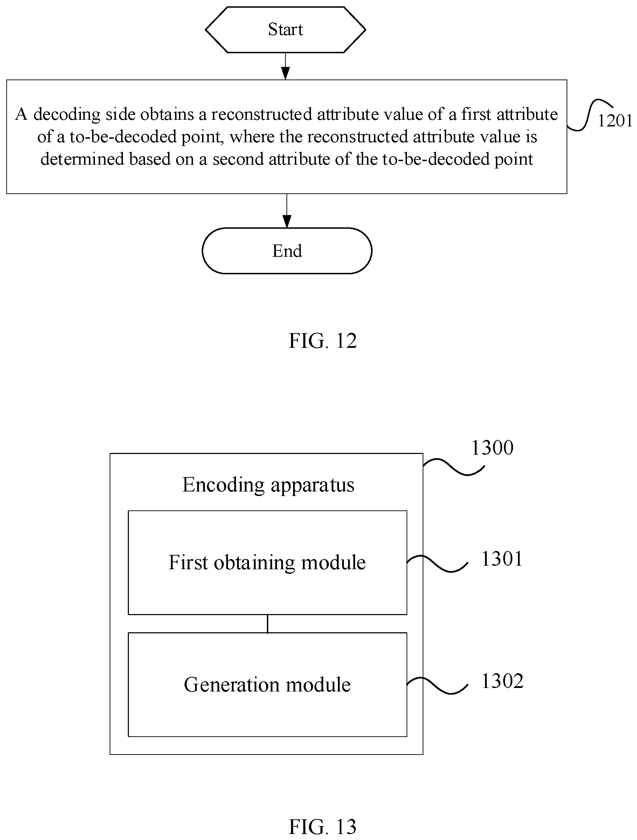

As shown in FIG. 12, an embodiment of this application provides a decoding method. The decoding method includes:
Step 1201: A decoding side obtains a reconstructed attribute value of a first attribute of a to-be-decoded point, where the reconstructed attribute value is determined based on a second attribute of the to-be-decoded point, the second attribute is a decoded attribute, and an attribute type of the first attribute is different from that of the second attribute.

Optionally, in an implementation, the obtaining a reconstructed attribute value of a first attribute of a to-be-decoded point includes:
The decoding side obtains a predicted attribute value of the first attribute of the to-be-decoded point, where the predicted attribute value is determined based on the second attribute of the to-be-decoded point.

The decoding side determines the reconstructed attribute value of the first attribute of the to-be-decoded point based on the predicted attribute value and first residual information of the first attribute.

Optionally, a specific implementation of obtaining the predicted attribute value of the first attribute of the to-be-decoded point includes:
The decoding side obtains an overall distance between the to-be-decoded point and each neighbor point in a first prediction point set under the condition of determining to use cross attribute prediction for the first attribute, where the overall distance is determined based on the second attribute of the to-be-decoded point and a second attribute of the neighbor point.

The decoding side re-sorts the neighbor points in the first prediction point set based on the overall distances to obtain a second prediction point set.

The decoding side determines the predicted attribute value of the first attribute of the to-be-decoded point based on the second prediction point set.

Optionally, a specific implementation of obtaining the overall distance between the to-be-decoded point and each neighbor point in the first prediction point set includes:
The decoding side obtains a geometry distance between the to-be-decoded point and each neighbor point in the first prediction point set.

The decoding side obtains an attribute distance between the second attribute of the to-be-decoded point and a second attribute of each neighbor point in the first prediction point set.

The decoding side determines the overall distance between the to-be-decoded point and each neighbor point in the first prediction point set based on the geometry distance and the attribute distance.

Optionally, a specific implementation of obtaining the attribute distance between the second attribute of the to-be-decoded point and the second attribute of each neighbor point in the first prediction point set includes:
The decoding side determines the attribute distance between the second attribute of the to-be-decoded point and the second attribute of each neighbor point in the first prediction point set based on a quantity of components included in a second attribute and a weight occupied by each component during attribute distance calculation.

Optionally, a specific implementation of determining the overall distance between the to-be-decoded point and each neighbor point in the first prediction point set based on the geometry distance and the attribute distance includes:
the decoding side determines the overall distance between the to-be-decoded point and each neighbor point in the first prediction point set based on the geometry distance, a weight corresponding to the geometry distance, the attribute distance, and a weight corresponding to the attribute distance.

Optionally, a specific implementation of re-sorting the neighbor points in the first prediction point set based on the overall distances to obtain the second prediction point set includes:
The decoding side re-sorts the neighbor points in the first prediction point set based on an ascending order of the overall distances to obtain the second prediction point set.

Optionally, a specific implementation of determining the predicted attribute value of the first attribute of the to-be-decoded point based on the second prediction point set includes:
The decoding side determines the predicted attribute value of the first attribute of the to-be-decoded point based on a reconstructed attribute value of a first attribute and a weight coefficient that are of each neighbor point in the second prediction point set.

The weight coefficient of the neighbor node is determined by the overall distance between the neighbor node and the to-be-decoded point.

Optionally, the method further includes:
The decoding side decodes a received target bitstream to obtain first indication information, where the first indication information indicates whether an encoding side uses cross attribute type prediction.

The decoding side obtains second indication information from the target bitstream under the condition of the first indication information indicating the encoding side to use cross attribute type prediction, where the second indication information indicates whether to use cross attribute prediction for the first attribute.

The decoding side determines, under the condition of the second indication information indicating to use cross attribute prediction for the first attribute, to use cross attribute prediction for the first attribute.

Optionally, in an implementation, the obtaining a predicted attribute value of the first attribute of the to-be-decoded point includes:
The decoding side obtains parameter information of a first objective function in a target bitstream.

The decoding side determines the predicted attribute value of the first attribute of the to-be-decoded point based on the parameter information of the objective function and a reconstructed attribute value of the second attribute of the to-be-decoded point.

The reconstructed attribute value of the second attribute of the to-be-decoded point is determined based on residual information of the second attribute of the to-be-decoded point indicated by the target bitstream.

Optionally, the obtaining a reconstructed attribute value of a first attribute of a to-be-decoded point includes:
The decoding side obtains parameter information of a second objective function in a target bitstream.

The decoding side determines predicted residual information of the first attribute of the to-be-decoded point based on the parameter information of the second objective function and second residual information of the second attribute of the to-be-decoded point.

The decoding side determines the reconstructed attribute value of the first attribute of the to-be-decoded point based on first residual information of the first attribute and the predicted residual information.

The first residual information of the first attribute is indicated by the target bitstream.

It should be noted that compared with the conventional technology, this embodiment of this application can reduce a bit rate and improve decoding efficiency.

It should be noted that all implementations in the above embodiments are also applicable to the embodiment of the decoding method applied to the decoding side, and the same technical effects can be achieved. Details are not described herein again.

The encoding method provided by embodiments of this application may be performed by an encoding apparatus. In an embodiment of this application, the encoding apparatus is used as an example to perform the encoding method to illustrate the encoding apparatus provided by embodiments of this application.

As shown in FIG. 13, the encoding apparatus 1300 in this embodiment of this application includes:
a first obtaining module 1301, configured to obtain first residual information of a first attribute of a to-be-encoded point, where the first residual information is determined based on a second attribute of the to-be-encoded point, the second attribute is an encoded attribute, and an attribute type of the first attribute is different from that of the second attribute; and
a generation module 1302, configured to generate a target bitstream based on the first residual information.

Optionally, the first obtaining module 1301 includes:
a first obtaining unit, configured to obtain a predicted attribute value of the first attribute of the to-be-encoded point, where the predicted attribute value is determined based on the second attribute of the to-be-encoded point; and
a first determining unit, configured to determine the first residual information of the first attribute of the to-be-encoded point based on the predicted attribute value.

Optionally, the first obtaining unit is configured to:
obtain an overall distance between the to-be-encoded point and each neighbor point in a first prediction point set under the condition of determining to use cross attribute prediction for the first attribute, where the overall distance is determined based on the second attribute of the to-be-encoded point and a second attribute of the neighbor point;
re-sort the neighbor points in the first prediction point set based on the overall distances to obtain a second prediction point set; and
determine the predicted attribute value of the first attribute of the to-be-encoded point based on the second prediction point set.

Optionally, an implementation of obtaining the overall distance between the to-be-encoded point and each neighbor point in the first prediction point set includes:
obtaining a geometry distance between the to-be-encoded point and each neighbor point in the first prediction point set;
obtaining an attribute distance between the second attribute of the to-be-encoded point and a second attribute of each neighbor point in the first prediction point set; and
determining the overall distance between the to-be-encoded point and each neighbor point in the first prediction point set based on the geometry distance and the attribute distance of the neighbor point.

Optionally, an implementation of obtaining the attribute distance between the second attribute of the to-be-encoded point and the second attribute of each neighbor point in the first prediction point set includes:
determining the attribute distance between the second attribute of the to-be-encoded point and the second attribute of each neighbor point in the first prediction point set based on a quantity of components included in a second attribute and a weight occupied by each component during attribute distance calculation.

Optionally, an implementation of determining the overall distance between the to-be-encoded point and each neighbor point in the first prediction point set based on the geometry distance and the attribute distance of the neighbor point includes:
determining the overall distance between the to-be-encoded point and each neighbor point in the first prediction point set based on the geometry distance, a weight corresponding to the geometry distance, the attribute distance, and a weight corresponding to the attribute distance.

Optionally, an implementation of re-sorting the neighbor points in the first prediction point set based on the overall distances to obtain the second prediction point set includes:
re-sorting the neighbor points in the first prediction point set based on an ascending order of the overall distances to obtain the second prediction point set.

Optionally, an implementation of determining the predicted attribute value of the first attribute of the to-be-encoded point based on the second prediction point set includes:
determining the predicted attribute value of the first attribute of the to-be-encoded point based on a reconstructed attribute value of a first attribute and a weight coefficient that are of each neighbor point in the second prediction point set, where
the weight coefficient of the neighbor node is determined by the overall distance between the neighbor node and the to-be-encoded point.

Optionally, the target bitstream includes first indication information and second indication information. The first indication information indicates whether the encoding side uses cross attribute type prediction, and the second indication information indicates whether to use cross attribute prediction for the first attribute.

Optionally, the first obtaining unit is configured to:
determine a first objective function based on original information of a second attribute and original information of a first attribute of a reference point set of the to-be-encoded point; and
determine the predicted attribute value of the first attribute of the to-be-encoded point based on the first objective function and a reconstructed attribute value of the second attribute of the to-be-encoded point.

Optionally, the target bitstream includes parameter information of the first objective function, the first residual information, and residual information of the second attribute of the to-be-encoded point.

Optionally, the first obtaining module 1301 includes:
a second determining unit, configured to determine a second objective function based on second residual information of a second attribute and second residual information of a first attribute of a reference point set of the to-be-encoded point; and
a third determining unit, configured to determine the first residual information of the first attribute of the to-be-encoded point based on the second objective function and second residual information of the second attribute of the to-be-encoded point.

Optionally, the third determining unit is configured to:
determine predicted residual information of the first attribute of the to-be-encoded point based on the second objective function and the second residual information of the second attribute of the to-be-encoded point; and
determine the first residual information of the first attribute of the to-be-encoded point based on the predicted residual information of the first attribute of the to-be-encoded point and second residual information of the first attribute of the to-be-encoded point.

Optionally, the target bitstream includes parameter information of the second objective function, the first residual information of the first attribute of the to-be-encoded point, and the second residual information of the second attribute in the reference point set.

It should be noted that this apparatus embodiment corresponds to the above method. All implementations in the above method embodiments are applicable to this apparatus embodiment, and the same technical effects can be achieved.

The encoding apparatus in embodiments of this application may be an electronic device such as an electronic device with an operating system, or a component in an electronic device such as an integrated circuit or a chip. The electronic device may be a terminal or another device excluding a terminal. For example, the terminal may include but is not limited to the types of the terminal 11 listed above, and the another device may be a server, a network-attached storage (Network-attached storage, NAS), or the like. This is not specifically limited in embodiments of this application.

The encoding side provided by embodiments of this application can implement each process implemented by the method embodiment in FIG. 10, and the same technical effects can be achieved. To avoid repetition, details are not described herein again.

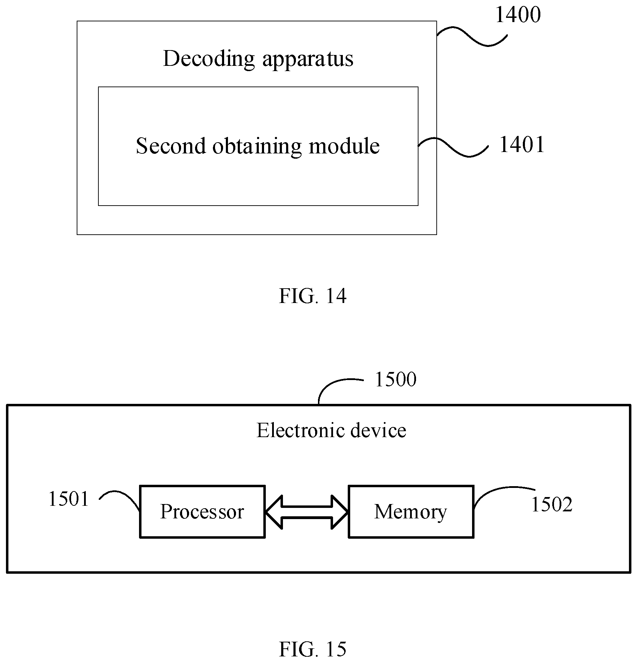

As shown in FIG. 14, a decoding apparatus 1400 in an embodiment of this application includes:
a second obtaining module 1401, configured to obtain a reconstructed attribute value of a first attribute of a to-be-decoded point, where the reconstructed attribute value is determined based on a second attribute of the to-be-decoded point, the second attribute is a decoded attribute, and an attribute type of the first attribute is different from that of the second attribute.

Optionally, the second obtaining module 1401 includes:
a second obtaining unit, configured to obtain a predicted attribute value of the first attribute of the to-be-decoded point, where the predicted attribute value is determined based on the second attribute of the to-be-decoded point; and
a fourth determining unit, configured to determine the reconstructed attribute value of the first attribute of the to-be-decoded point based on the predicted attribute value and first residual information of the first attribute.

Optionally, the second obtaining unit is configured to:
obtain an overall distance between the to-be-decoded point and each neighbor point in a first prediction point set under the condition of determining to use cross attribute prediction for the first attribute, where the overall distance is determined based on the second attribute of the to-be-decoded point and a second attribute of the neighbor point;
re-sort the neighbor points in the first prediction point set based on the overall distances to obtain a second prediction point set; and
determine the predicted attribute value of the first attribute of the to-be-decoded point based on the second prediction point set.

Optionally, an implementation of obtaining the overall distance between the to-be-decoded point and each neighbor point in the first prediction point set includes:
obtaining a geometry distance between the to-be-decoded point and each neighbor point in the first prediction point set;
obtaining an attribute distance between the second attribute of the to-be-decoded point and a second attribute of each neighbor point in the first prediction point set; and
determining the overall distance between the to-be-decoded point and each neighbor point in the first prediction point set based on the geometry distance and the attribute distance.

Optionally, an implementation of obtaining the attribute distance between the second attribute of the to-be-decoded point and the second attribute of each neighbor point in the first prediction point set includes:
determining the attribute distance between the second attribute of the to-be-decoded point and the second attribute of each neighbor point in the first prediction point set based on a quantity of components included in a second attribute and a weight occupied by each component during attribute distance calculation.

Optionally, an implementation of determining the overall distance between the to-be-decoded point and each neighbor point in the first prediction point set based on the geometry distance and the attribute distance includes:
determining the overall distance between the to-be-decoded point and each neighbor point in the first prediction point set based on the geometry distance, a weight corresponding to the geometry distance, the attribute distance, and a weight corresponding to the attribute distance.

Optionally, an implementation of re-sorting the neighbor points in the first prediction point set based on the overall distances to obtain the second prediction point set includes:
re-sorting the neighbor points in the first prediction point set based on an ascending order of the overall distances to obtain the second prediction point set.

Optionally, an implementation of determining the predicted attribute value of the first attribute of the to-be-decoded point based on the second prediction point set includes:
determining the predicted attribute value of the first attribute of the to-be-decoded point based on a reconstructed attribute value of a first attribute and a weight coefficient that are of each neighbor point in the second prediction point set, where
the weight coefficient of the neighbor node is determined by the overall distance between the neighbor node and the to-be-decoded point.

Optionally, the decoding apparatus further includes:
a third obtaining module, configured to decode a received target bitstream to obtain first indication information, where the first indication information indicates whether an encoding side uses cross attribute type prediction;
a fourth obtaining module, configured to, obtain second indication information from the target bitstream under the condition of the first indication information indicating the encoding side to use cross attribute type prediction, where the second indication information indicates whether to use cross attribute prediction for the first attribute; and
a determining module, configured to determine, under the condition of the second indication information indicating to use cross attribute prediction for the first attribute, to use cross attribute prediction for the first attribute.

Optionally, the second obtaining unit is configured to:
obtain parameter information of a first objective function in a target bitstream; and
determine the predicted attribute value of the first attribute of the to-be-decoded point based on the parameter information of the objective function and a reconstructed attribute value of the second attribute of the to-be-decoded point, where
the reconstructed attribute value of the second attribute of the to-be-decoded point is determined based on residual information of the second attribute of the to-be-decoded point indicated by the target bitstream.

Optionally, the second obtaining module 1401 includes:
a third obtaining unit, configured to obtain parameter information of a second objective function in the target bitstream;
a fifth determining unit, configured to determine predicted residual information of the first attribute of the to-be-decoded point based on the parameter information of the second objective function and second residual information of the second attribute of the to-be-decoded point; and
a sixth determining unit, configured to determine the reconstructed attribute value of the first attribute of the to-be-decoded point based on first residual information of the first attribute and the predicted residual information, where
the first residual information of the first attribute is indicated by the target bitstream.

It should be noted that this apparatus embodiment corresponds to the above method. All implementations in the above method embodiments are applicable to this apparatus embodiment, and the same technical effects can be achieved.

The decoding side in embodiments of this application may be an electronic device such as an electronic device with an operating system, or a component in an electronic device such as an integrated circuit or a chip. The electronic device may be a terminal or another device excluding a terminal. For example, the terminal may include but is not limited to the types of the terminal 11 listed above, and the another device may be a server, a network-attached storage (Network-attached storage, NAS), or the like. This is not specifically limited in embodiments of this application.

The decoding side provided by embodiments of this application can implement each process implemented by the method embodiment in FIG. 12, and the same technical effects can be achieved. To avoid repetition, details are not described herein again.

As shown in FIG. 15, an embodiment of this application further provides an electronic device 1500, including a processor 1501 and a memory 1502. A program or instructions executable on the processor 1501 are stored on the memory 1502. For example, when the electronic device 1500 is an encoding side device, the program or instructions implement each step of the above encoding method embodiments when executed by the processor 1501, and the same technical effects can be achieved. When the electronic device 1500 is a decoding side device, the program or instructions implement each step of the above decoding method embodiments when executed by the processor 1501, and the same technical effects can be achieved. To avoid repetition, details are not described herein again. Optionally, the memory 1502 may be the memory 102 or the memory 113 in the embodiment shown in FIG. 1, and the processor 1501 may implement the functions of the encoder 200 or the decoder 300 in embodiments shown in FIGS. 1-3.

An embodiment of this application further provides an electronic device, including: a memory configured to store video data; and a processing circuit configured to implement each step of the above encoding or decoding method embodiments. Optionally, the memory may be the memory 102 or the memory 113 in the embodiment shown in FIG. 1, and the processing circuit may implement the functions of the encoder 200 or the decoder 300 in embodiments shown in FIGS. 1-3.

An embodiment of this application further provides an electronic device including a processor and a communication interface. The communication interface is coupled to the processor, and the processor is configured to run a program or instructions to implement the steps in the method embodiment shown in FIG. 10 or FIG. 12. This device embodiment corresponds to the foregoing method embodiment, each implementation process and implementation of the foregoing method embodiment can be applied to this terminal embodiment, and the same technical effects can be achieved.

The foregoing electronic device may be a terminal, or another device excluding a terminal, such as a server or a network-attached storage (Network-attached storage, NAS).

The terminal may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) or virtual reality (Virtual Reality, VR) device, a mixed reality (mixed reality, MR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), a smart home (a home device with wireless communication function, such as a refrigerator, a television, a washing machine, or furniture), a game console, a personal computer (Personal Computer, PC), an automated teller machine, or a self-service machine. The wearable device includes a smartwatch, a smart band, smart earphones, smart glasses, smart jewelry (a smart bracelet, a smart chain bracelet, a smart ring, a smart necklace, a smart leglet, a smart anklet, and the like), a smart wristband, smart clothing, or the like. The vehicle user equipment may also be called an in-vehicle terminal, an in-vehicle controller, an in-vehicle module, an in-vehicle component, an in-vehicle chip, an in-vehicle unit, and the like. It should be noted that a specific type of the terminal is not limited in embodiments of this application.

The server may be an independent physical server, or a server cluster or distributed system composed of a plurality of physical servers, or may be a cloud server. The cloud server may provide a cloud service, a cloud database, cloud computing, cloud functions, cloud storage, a network service, cloud communication, a middleware service, a domain name service, a security service, a content delivery network (Content Delivery Network, CDN), or a cloud computing service based on a big data and artificial intelligence platform.

For example, the foregoing electronic device may include but is not limited to the types of the source device 100 or the destination device 110 shown in FIG. 1.

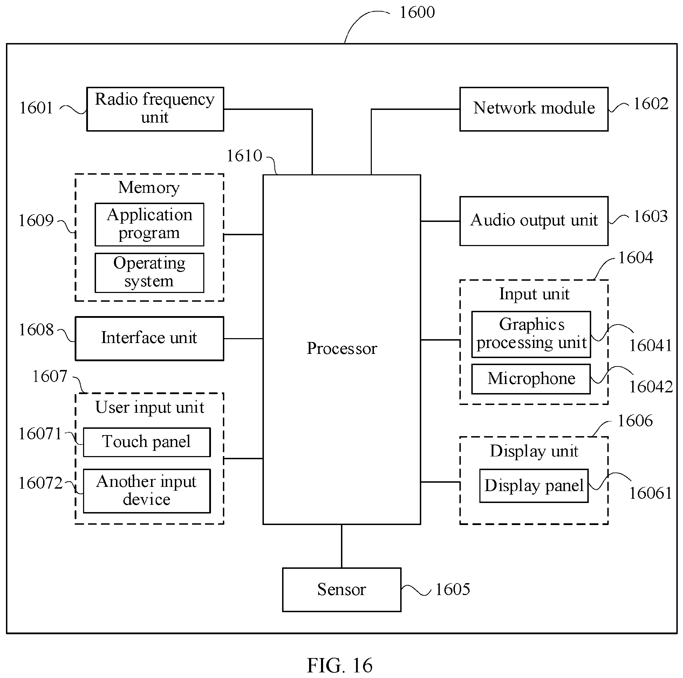

For example, the electronic device is a terminal. FIG. 16 is a schematic diagram of a hardware structure of a terminal implementing an embodiment of this application.

The terminal 1600 includes but is not limited to at least a part of the following components: a radio frequency unit 1601, a network module 1602, an audio output unit 1603, an input unit 1604, a sensor 1605, a display unit 1606, a user input unit 1607, an interface unit 1608, a memory 1609, a processor 1610, and the like.

Persons skilled in the art can understand that the terminal 1600 may also include a power supply (such as a battery) for supplying power to each component. The power supply may be logically connected to the processor 1610 via a power management system, thereby implementing functions such as charging management, discharging management, and power consumption management via the power management system. The terminal structure shown in FIG. 16 does not constitute a limitation to the terminal. The terminal may include more or fewer components than those shown, or combine some components, or arrange different components. Details are not described herein.

It should be understood that in embodiments of this application, the input unit 1604 may include a graphics processing unit (Graphics Processing Unit, GPU) 16041 and a microphone 16042. The graphics processing unit 16041 processes image data of still pictures or videos obtained by an image capture apparatus (such as a camera) in video capture mode or image capture mode, or may process obtained point cloud data. The display unit 1606 may include a display panel 16061. The display panel 16061 can be configured in the form of a liquid crystal display, an organic light-emitting diode, or the like. The user input unit 1607 includes at least one of: a touch panel 16071 and another input device 16072. The touch panel 16071 is also called a touch screen. The touch panel 16071 may include two parts: a touch detection device and a touch controller. The another input device 16072 may include but is not limited to a physical keyboard, a function key (such as a volume control key or a switch key), a trackball, a mouse, and a joystick. Details are not described herein.

In embodiments of this application, after receiving downlink data from a network-side device, the radio frequency unit 1601 may transmit it to the processor 1610 for processing. In addition, the radio frequency unit 1601 may send uplink data to the network-side device. Generally, the radio frequency unit 1601 includes but is not limited to an antenna, an amplifier, a transceiver, a coupler, a low noise amplifier, a duplexer, and the like.

The memory 1609 may be configured to store software programs or instructions as well as various data. The memory 1609 may mainly include a first storage area for storing the programs or instructions and a second storage area for storing data. The first storage area can store an operating system, application programs or instructions required for at least one function (such as a sound playback function and an image playback function), and the like. In addition, the memory 1609 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1609 in embodiments of this application includes but is not limited to these and any other suitable types of memories.

The processor 1610 may include one or more processing units. Optionally, the processor 1610 integrates an application processor and a modem processor. The application processor mainly processes operations related to the operating system, user interface, and application programs, and the modem processor mainly processes wireless communication signals, such as a baseband processor. It can be understood that the above modem processor may alternatively not be integrated into the processor 1610.

In an embodiment of this application, the processor 1610 is configured to:
obtain first residual information of a first attribute of a to-be-encoded point, where the first residual information is determined based on a second attribute of the to-be-encoded point, the second attribute is an encoded attribute, and an attribute type of the first attribute is different from that of the second attribute; and
generate a target bitstream based on the first residual information.

Optionally, the processor 1610 is configured to:
obtain a predicted attribute value of the first attribute of the to-be-encoded point, where the predicted attribute value is determined based on the second attribute of the to-be-encoded point; and
determine the first residual information of the first attribute of the to-be-encoded point based on the predicted attribute value.

Optionally, the processor 1610 is configured to:
obtain an overall distance between the to-be-encoded point and each neighbor point in a first prediction point set under the condition of determining to use cross attribute prediction for the first attribute, where the overall distance is determined based on the second attribute of the to-be-encoded point and a second attribute of the neighbor point;
re-sort the neighbor points in the first prediction point set based on the overall distances to obtain a second prediction point set; and
determine the predicted attribute value of the first attribute of the to-be-encoded point based on the second prediction point set.

Optionally, the processor 1610 is configured to:
obtain a geometry distance between the to-be-encoded point and each neighbor point in the first prediction point set;
obtain an attribute distance between the second attribute of the to-be-encoded point and a second attribute of each neighbor point in the first prediction point set; and
determine the overall distance between the to-be-encoded point and each neighbor point in the first prediction point set based on the geometry distance and the attribute distance of the neighbor point.

Optionally, the processor 1610 is configured to:
determine the attribute distance between the second attribute of the to-be-encoded point and the second attribute of each neighbor point in the first prediction point set based on a quantity of components included in a second attribute and a weight occupied by each component during attribute distance calculation.

Optionally, the processor is configured to:
determine the overall distance between the to-be-encoded point and each neighbor point in the first prediction point set based on the geometry distance, a weight corresponding to the geometry distance, the attribute distance, and a weight corresponding to the attribute distance.

Optionally, the processor 1610 is configured to:
re-sort the neighbor points in the first prediction point set based on an ascending order of the overall distances to obtain the second prediction point set.

Optionally, the processor 1610 is configured to:
determine the predicted attribute value of the first attribute of the to-be-encoded point based on a reconstructed attribute value of a first attribute and a weight coefficient that are of each neighbor point in the second prediction point set, where
the weight coefficient of the neighbor node is determined by the overall distance between the neighbor node and the to-be-encoded point.

Optionally, the target bitstream includes first indication information and second indication information. The first indication information indicates whether the encoding side uses cross attribute type prediction, and the second indication information indicates whether to use cross attribute prediction for the first attribute.

Optionally, the processor 1610 is configured to:
determine a first objective function based on original information of a second attribute and original information of a first attribute of a reference point set of the to-be-encoded point; and
determine the predicted attribute value of the first attribute of the to-be-encoded point based on the first objective function and a reconstructed attribute value of the second attribute of the to-be-encoded point.

Optionally, the target bitstream includes parameter information of the first objective function, the first residual information, and residual information of the second attribute of the to-be-encoded point.

Optionally, the processor is configured to:
determine a second objective function based on second residual information of a second attribute and second residual information of a first attribute of a reference point set of the to-be-encoded point; and
determine the first residual information of the first attribute of the to-be-encoded point based on the second objective function and second residual information of the second attribute of the to-be-encoded point.

Optionally, the processor 1610 is configured to:
determine predicted residual information of the first attribute of the to-be-encoded point based on the second objective function and the second residual information of the second attribute of the to-be-encoded point; and
determine the first residual information of the first attribute of the to-be-encoded point based on the predicted residual information of the first attribute of the to-be-encoded point and second residual information of the first attribute of the to-be-encoded point.

Optionally, the target bitstream includes parameter information of the second objective function, the first residual information of the first attribute of the to-be-encoded point, and the second residual information of the second attribute in the reference point set.

Preferably, an embodiment of this application further provides an electronic device, including a processor, a memory, and a program or instructions stored on the memory and executable on the processor. The program or instructions implement each process of the above encoding method embodiments when executed by the processor, and the same technical effects can be achieved. To avoid repetition, details are not described herein again.

An embodiment of this application further provides a readable storage medium. A program or instructions are stored on the computer-readable storage medium. The program or instructions implement each process of the above encoding method embodiments when executed by a processor, and the same technical effects can be achieved. To avoid repetition, details are not described herein again.

The computer-readable storage medium includes, for example, a read-only memory (Read-Only Memory, ROM for short), a random access memory (Random Access Memory, RAM for short), a magnetic disk, or an optical disk.

In another embodiment of this application, the processor 1610 is configured to:
obtain a reconstructed attribute value of a first attribute of a to-be-decoded point, where the reconstructed attribute value is determined based on a second attribute of the to-be-decoded point, the second attribute is a decoded attribute, and an attribute type of the first attribute is different from that of the second attribute.

Optionally, the processor is configured to:
obtain a predicted attribute value of the first attribute of the to-be-decoded point, where the predicted attribute value is determined based on the second attribute of the to-be-decoded point; and
determine the reconstructed attribute value of the first attribute of the to-be-decoded point based on the predicted attribute value and first residual information of the first attribute.

Optionally, the processor is configured to:
obtain an overall distance between the to-be-decoded point and each neighbor point in a first prediction point set under the condition of determining to use cross attribute prediction for the first attribute, where the overall distance is determined based on the second attribute of the to-be-decoded point and a second attribute of the neighbor point;
re-sort the neighbor points in the first prediction point set based on the overall distances to obtain a second prediction point set; and
determine the predicted attribute value of the first attribute of the to-be-decoded point based on the second prediction point set.

Optionally, the processor is configured to:
obtain a geometry distance between the to-be-decoded point and each neighbor point in the first prediction point set;
obtain an attribute distance between the second attribute of the to-be-decoded point and a second attribute of each neighbor point in the first prediction point set; and
determine the overall distance between the to-be-decoded point and each neighbor point in the first prediction point set based on the geometry distance and the attribute distance.

Optionally, the processor is configured to:
determine the attribute distance between the second attribute of the to-be-decoded point and the second attribute of each neighbor point in the first prediction point set based on a quantity of components included in a second attribute and a weight occupied by each component during attribute distance calculation.

Optionally, the processor is configured to:
determine the overall distance between the to-be-decoded point and each neighbor point in the first prediction point set based on the geometry distance, a weight corresponding to the geometry distance, the attribute distance, and a weight corresponding to the attribute distance.

Optionally, the processor is configured to:
re-sort the neighbor points in the first prediction point set based on an ascending order of the overall distances to obtain the second prediction point set.

Optionally, the processor is configured to:
determine the predicted attribute value of the first attribute of the to-be-decoded point based on a reconstructed attribute value of a first attribute and a weight coefficient that are of each neighbor point in the second prediction point set, where
the weight coefficient of the neighbor node is determined by the overall distance between the neighbor node and the to-be-decoded point.

Optionally, the processor is further configured to:
decode a received target bitstream to obtain first indication information, where the first indication information indicates whether an encoding side uses cross attribute type prediction;
obtain second indication information from the target bitstream under the condition of the first indication information indicating the encoding side to use cross attribute type prediction, where the second indication information indicates whether to use cross attribute prediction for the first attribute; and
determine, under the condition of the second indication information indicating to use cross attribute prediction for the first attribute, to use cross attribute prediction for the first attribute.

Optionally, the processor is configured to:
obtain parameter information of a first objective function in a target bitstream; and
determine the predicted attribute value of the first attribute of the to-be-decoded point based on the parameter information of the objective function and a reconstructed attribute value of the second attribute of the to-be-decoded point, where
the reconstructed attribute value of the second attribute of the to-be-decoded point is determined based on residual information of the second attribute of the to-be-decoded point indicated by the target bitstream.

Optionally, the processor is configured to:
obtain parameter information of a second objective function in a target bitstream;
determine predicted residual information of the first attribute of the to-be-decoded point based on the parameter information of the second objective function and second residual information of the second attribute of the to-be-decoded point; and
determine the reconstructed attribute value of the first attribute of the to-be-decoded point based on first residual information of the first attribute and the predicted residual information, where
the first residual information of the first attribute is indicated by the target bitstream.

An embodiment of this application further provides a chip. The chip includes a processor and a communication interface. The communication interface is coupled to the processor, and the processor is configured to run a program or instructions to implement each process of the above encoding or decoding method embodiments, and the same technical effects can be achieved. To avoid repetition, details are not described herein again.

It should be understood that the chip mentioned in embodiments of this application may also be called a system-level chip, a system chip, a chip system, a system-on-chip, or the like.

An embodiment of this application further provides a computer program/program product. The computer program/program product is stored in a storage medium. The computer program/program product is executed by at least one processor to implement each process of the above encoding or decoding method embodiments, and the same technical effects can be achieved. To avoid repetition, details are not described herein again.

An embodiment of this application further provides a coding system, including an encoding device and a decoding device. The encoding device may be configured to perform the steps of the above encoding methods, and the decoding device may be configured to perform the steps of the above decoding methods.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in embodiments of this application is not limited to performing the functions in the order shown or discussed, but may also include performing the functions in a substantially simultaneous manner or in a reverse order depending on the functions involved. For example, the described methods may be performed in an order different from that described, or various steps may be added, omitted, or combined. In addition, features described with reference to some examples may be combined in other examples.

Through the description of the above embodiments, persons skilled in the art can clearly understand that the methods in the above embodiments can be implemented by means of software plus a necessary general-purpose hardware platform. Certainly, hardware may alternatively be used, but in many cases the former is a better implementation. Based on this understanding, the technical solutions of this application essentially or the parts contributing to the conventional technology can be embodied in the form of a computer software product stored in a storage medium (such as ROM/RAM, magnetic disk, optical disk), including several instructions to make a terminal (which may be a mobile phone, a computer, a server, an air conditioner, or a network device, or the like) execute the methods described in each embodiment of this application.

The foregoing describes embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from principles of this application and the protection scope of the claims, and all such forms fall within the protection scope of this application.

## Claims

1. An encoding method, comprising:
obtaining, by an encoding side, first residual information of a first attribute of a to-be-encoded point, wherein the first residual information is determined based on a second attribute of the to-be-encoded point, the second attribute is an encoded attribute, and an attribute type of the first attribute is different from that of the second attribute; and
generating, by the encoding side, a target bitstream based on the first residual information.

2. The method according to claim 1, wherein the obtaining first residual information of a first attribute of a to-be-encoded point comprises:
obtaining, by the encoding side, a predicted attribute value of the first attribute of the to-be-encoded point, wherein the predicted attribute value is determined based on the second attribute of the to-be-encoded point; and
determining, by the encoding side, the first residual information of the first attribute of the to-be-encoded point based on the predicted attribute value.

3. The method according to claim 2, wherein the obtaining a predicted attribute value of the first attribute of the to-be-encoded point comprises:
obtaining, by the encoding side, an overall distance between the to-be-encoded point and each neighbor point in a first prediction point set under the condition of determining to use cross attribute prediction for the first attribute, wherein the overall distance is determined based on the second attribute of the to-be-encoded point and a second attribute of the neighbor point;
re-sorting, by the encoding side, the neighbor points in the first prediction point set based on the overall distances to obtain a second prediction point set; and
determining, by the encoding side, the predicted attribute value of the first attribute of the to-be-encoded point based on the second prediction point set.

4. The method according to claim 3, wherein the obtaining an overall distance between the to-be-encoded point and each neighbor point in a first prediction point set comprises:
obtaining, by the encoding side, a geometry distance between the to-be-encoded point and each neighbor point in the first prediction point set;
obtaining, by the encoding side, an attribute distance between the second attribute of the to-be-encoded point and a second attribute of each neighbor point in the first prediction point set; and
determining, by the encoding side, the overall distance between the to-be-encoded point and each neighbor point in the first prediction point set based on the geometry distance and the attribute distance of the neighbor point.

5. The method according to claim 4, wherein the obtaining an attribute distance between the second attribute of the to-be-encoded point and a second attribute of each neighbor point in the first prediction point set comprises:
determining, by the encoding side, the attribute distance between the second attribute of the to-be-encoded point and the second attribute of each neighbor point in the first prediction point set based on a quantity of components comprised in a second attribute and a weight occupied by each component during attribute distance calculation.

6. The method according to claim 4, wherein the determining the overall distance between the to-be-encoded point and each neighbor point in the first prediction point set based on the geometry distance and the attribute distance of the neighbor point comprises:
determining, by the encoding side, the overall distance between the to-be-encoded point and each neighbor point in the first prediction point set based on the geometry distance, a weight corresponding to the geometry distance, the attribute distance, and a weight corresponding to the attribute distance.

7. The method according to any one of claims 3 to 6, wherein the re-sorting the neighbor points in the first prediction point set based on the overall distances to obtain the second prediction point set comprises:
re-sorting, by the encoding side, the neighbor points in the first prediction point set based on an ascending order of the overall distances to obtain the second prediction point set.

8. The method according to any one of claims 3 to 7, wherein the determining the predicted attribute value of the first attribute of the to-be-encoded point based on the second prediction point set comprises:
determining, by the encoding side, the predicted attribute value of the first attribute of the to-be-encoded point based on a reconstructed attribute value of a first attribute and a weight coefficient that are of each neighbor point in the second prediction point set, wherein
the weight coefficient of the neighbor node is determined by the overall distance between the neighbor node and the to-be-encoded point.

9. The method according to any one of claims 3 to 8, wherein the target bitstream comprises first indication information and second indication information, wherein the first indication information indicates whether the encoding side uses cross attribute type prediction, and the second indication information indicates whether to use cross attribute prediction for the first attribute.

10. The method according to claim 2, wherein the obtaining a predicted attribute value of the first attribute of the to-be-encoded point comprises:
determining, by the encoding side, a first objective function based on original information of a second attribute and original information of a first attribute of a reference point set of the to-be-encoded point; and
determining, by the encoding side, the predicted attribute value of the first attribute of the to-be-encoded point based on the first objective function and a reconstructed attribute value of the second attribute of the to-be-encoded point.

11. The method according to claim 10, wherein the target bitstream comprises parameter information of the first objective function, the first residual information, and residual information of the second attribute of the to-be-encoded point.

12. The method according to claim 1, wherein the obtaining first residual information of a first attribute of a to-be-encoded point comprises:
determining, by the encoding side, a second objective function based on second residual information of a second attribute and second residual information of a first attribute of a reference point set of the to-be-encoded point; and
determining, by the encoding side, the first residual information of the first attribute of the to-be-encoded point based on the second objective function and second residual information of the second attribute of the to-be-encoded point.

13. The method according to claim 12, wherein the determining, by the encoding side, the first residual information of the first attribute of the to-be-encoded point based on the second objective function and second residual information of the second attribute of the to-be-encoded point comprises:
determining, by the encoding side, predicted residual information of the first attribute of the to-be-encoded point based on the second objective function and the second residual information of the second attribute of the to-be-encoded point; and
determining, by the encoding side, the first residual information of the first attribute of the to-be-encoded point based on the predicted residual information of the first attribute of the to-be-encoded point and second residual information of the first attribute of the to-be-encoded point.

14. The method according to claim 12 or 13, wherein the target bitstream comprises parameter information of the second objective function, the first residual information of the first attribute of the to-be-encoded point, and the second residual information of the second attribute in the reference point set.

15. A decoding method, comprising:
obtaining, by a decoding side, a reconstructed attribute value of a first attribute of a to-be-decoded point, wherein the reconstructed attribute value is determined based on a second attribute of the to-be-decoded point, the second attribute is a decoded attribute, and an attribute type of the first attribute is different from that of the second attribute.

16. The method according to claim 15, wherein the obtaining a reconstructed attribute value of a first attribute of a to-be-decoded point comprises:
obtaining, by the decoding side, a predicted attribute value of the first attribute of the to-be-decoded point, wherein the predicted attribute value is determined based on the second attribute of the to-be-decoded point; and
determining, by the decoding side, the reconstructed attribute value of the first attribute of the to-be-decoded point based on the predicted attribute value and first residual information of the first attribute.

17. The method according to claim 16, wherein the obtaining a predicted attribute value of the first attribute of the to-be-decoded point comprises:
obtaining, by the decoding side, an overall distance between the to-be-decoded point and each neighbor point in a first prediction point set under the condition of determining to use cross attribute prediction for the first attribute, wherein the overall distance is determined based on the second attribute of the to-be-decoded point and a second attribute of the neighbor point;
re-sorting, by the decoding side, the neighbor points in the first prediction point set based on the overall distances to obtain a second prediction point set; and
determining, by the decoding side, the predicted attribute value of the first attribute of the to-be-decoded point based on the second prediction point set.

18. The method according to claim 17, wherein the obtaining an overall distance between the to-be-decoded point and each neighbor point in a first prediction point set comprises:
obtaining, by the decoding side, a geometry distance between the to-be-decoded point and each neighbor point in the first prediction point set;
obtaining, by the decoding side, an attribute distance between the second attribute of the to-be-decoded point and a second attribute of each neighbor point in the first prediction point set; and
determining, by the decoding side, the overall distance between the to-be-decoded point and each neighbor point in the first prediction point set based on the geometry distance and the attribute distance.

19. The method according to claim 18, wherein the obtaining an attribute distance between the second attribute of the to-be-decoded point and a second attribute of each neighbor point in the first prediction point set comprises:
determining, by the decoding side, the attribute distance between the second attribute of the to-be-decoded point and the second attribute of each neighbor point in the first prediction point set based on a quantity of components comprised in a second attribute and a weight occupied by each component during attribute distance calculation.

20. The method according to claim 18, wherein the determining the overall distance between the to-be-decoded point and each neighbor point in the first prediction point set based on the geometry distance and the attribute distance comprises:
determining, by the decoding side, the overall distance between the to-be-decoded point and each neighbor point in the first prediction point set based on the geometry distance, a weight corresponding to the geometry distance, the attribute distance, and a weight corresponding to the attribute distance.

21. The method according to any one of claims 17 to 20, wherein the re-sorting the neighbor points in the first prediction point set based on the overall distances to obtain the second prediction point set comprises:
re-sorting, by the decoding side, the neighbor points in the first prediction point set based on an ascending order of the overall distances to obtain the second prediction point set.

22. The method according to any one of claims 17 to 20, wherein the determining the predicted attribute value of the first attribute of the to-be-decoded point based on the second prediction point set comprises:
determining, by the decoding side, the predicted attribute value of the first attribute of the to-be-decoded point based on a reconstructed attribute value of a first attribute and a weight coefficient that are of each neighbor point in the second prediction point set, wherein
the weight coefficient of the neighbor node is determined by the overall distance between the neighbor node and the to-be-decoded point.

23. The method according to any one of claims 17 to 22, further comprising:
decoding, by the decoding side, a received target bitstream to obtain first indication information, wherein the first indication information indicates whether an encoding side uses cross attribute type prediction;
obtaining, by the decoding side, second indication information from the target bitstream under the condition of the first indication information indicating the encoding side to use cross attribute type prediction, wherein the second indication information indicates whether to use cross attribute prediction for the first attribute; and
determining, by the decoding side under the condition of the second indication information indicating to use cross attribute prediction for the first attribute, to use cross attribute prediction for the first attribute.

24. The method according to claim 16, wherein the obtaining a predicted attribute value of the first attribute of the to-be-decoded point comprises:
obtaining, by the decoding side, parameter information of a first objective function in a target bitstream; and
determining, by the decoding side, the predicted attribute value of the first attribute of the to-be-decoded point based on the parameter information of the objective function and a reconstructed attribute value of the second attribute of the to-be-decoded point, wherein
the reconstructed attribute value of the second attribute of the to-be-decoded point is determined based on residual information of the second attribute of the to-be-decoded point indicated by the target bitstream.

25. The method according to claim 15, wherein the obtaining a reconstructed attribute value of a first attribute of a to-be-decoded point comprises:
obtaining, by the decoding side, parameter information of a second objective function in a target bitstream;
determining, by the decoding side, predicted residual information of the first attribute of the to-be-decoded point based on the parameter information of the second objective function and second residual information of the second attribute of the to-be-decoded point; and
determining, by the decoding side, the reconstructed attribute value of the first attribute of the to-be-decoded point based on first residual information of the first attribute and the predicted residual information, wherein
the first residual information of the first attribute is indicated by the target bitstream.

26. An encoding apparatus, comprising:
a first obtaining module, configured to obtain first residual information of a first attribute of a to-be-encoded point, wherein the first residual information is determined based on a second attribute of the to-be-encoded point, the second attribute is an encoded attribute, and an attribute type of the first attribute is different from that of the second attribute; and
a generation module, configured to generate a target bitstream based on the first residual information.

27. The encoding apparatus according to claim 26, wherein the first obtaining module comprises:
a first obtaining unit, configured to obtain a predicted attribute value of the first attribute of the to-be-encoded point, wherein the predicted attribute value is determined based on the second attribute of the to-be-encoded point; and
a first determining unit, configured to determine the first residual information of the first attribute of the to-be-encoded point based on the predicted attribute value.

28. The encoding apparatus according to claim 26, wherein the first obtaining module comprises:
a second determining unit, configured to determine a second objective function based on second residual information of a second attribute and second residual information of a first attribute of a reference point set of the to-be-encoded point; and
a third determining unit, configured to determine the first residual information of the first attribute of the to-be-encoded point based on the second objective function and second residual information of the second attribute of the to-be-encoded point.

29. A decoding apparatus, comprising:
a second obtaining module, configured to obtain a reconstructed attribute value of a first attribute of a to-be-decoded point, wherein the reconstructed attribute value is determined based on a second attribute of the to-be-decoded point, the second attribute is a decoded attribute, and an attribute type of the first attribute is different from that of the second attribute.

30. An electronic device, comprising a processor and a memory, wherein the memory stores a program or instructions executable on the processor; and when executed by the processor, the program or instructions implement the steps of the encoding method according to any one of claims 1 to 14 or the steps of the decoding method according to any one of claims 15 to 25.

31. A readable storage medium, wherein a program or instructions are stored on the readable storage medium; and when executed by a processor, the program or instructions implement the steps of the encoding method according to any one of claims 1 to 14 or the steps of the decoding method according to any one of claims 15 to 25.

32. A chip, wherein the chip comprises a processor and a communication interface, the communication interface is coupled to the processor, and the processor is configured to run a program or instructions to implement the steps of the encoding method according to any one of claims 1 to 14 or the steps of the decoding method according to any one of claims 15 to 25.
